# EUROPEAN PATENT APPLICATION

(11) **EP 4 661 456 A1**
(43) Date of publication of application: **10.12.2025**
(21) Application number: 24844276.6
(22) Date of filing: 11.04.2024
(51) Int. Cl.: H04W 8/24

(54) **COMMUNICATION METHODS, DEVICE, AND STORAGE MEDIUM**

(30) Priority: 24.07.2023 CN 202310921044
(71) Applicant: ZTE Corporation, Shenzhen, Guangdong 518057 (CN)
(72) Inventor: YUAN, Liquan, Shenzhen, Guangdong 518057 (CN)
(74) Representative: Vossius & Partner Patentanwälte Rechtsanwälte mbB
(86) International application number: PCT/CN2024/087248
(87) International publication number: WO 2025/020580

(57) **Abstract**

The present application belongs to the technical field of communications. Disclosed are communication methods, a device and a storage medium. A method comprises: a multi-link terminal device acquiring a pre-configured terminal identifier and/or at least one link identifier; and the multi-link terminal device sending to a multi-link network device a first frame which contains the terminal identifier and/or the at least one link identifier, so that the multi-link network device identifies the multi-link terminal device and/or a link according to the terminal identifier and/or the at least one link identifier.

## Description

### CROSS-REFERENCE TO RELATED APPLICATION

This application is filed on the basis of the Chinese patent application No. 2023109210447 filed July 24, 2023, and claims priority of the Chinese patent application, the entire contents of which are incorporated herein by reference.

### TECHNICAL FIELD

The present application relates to the field of communication technology, and in particular to a communication method, device and storage medium.

### BACKGROUND

During a communication process, a terminal device typically employs a unique and fixed Media Access Control Address (MAC) address to establish a connection with a network device. The identification and authentication technologies based on device-fixed MAC address have been widely utilized in the field of wireless transmission. However, fixed MAC addresses can easily be sniffed by a third-party device using MAC address sniffing to track and locate the connection between the terminal device and the network device. To solve this problem, in some related technical schemes, a user is allowed to use a random MAC address (RMA) before a terminal device accesses a network device. However, the random MAC address technology of terminal devices has caused the failure of device MAC address-related functions defined by the Wi-Fi Alliance (WFA) and the Wi-Fi Broadband Alliance (WBA), resulting in failures in network management for devices.

### SUMMARY

Provided are a method for communication, a network device and a storage medium in various embodiments of the present application.

According to a first aspect of the present application, A method for communication is provided. The method includes: acquiring, by a multi-link terminal device, a pre-configured terminal identifier and/or at least one link identifier; and sending, by the multi-link terminal device, a first frame that comprises the terminal identifier and/or the at least one link identifier to a multi-link network device, to cause the multi-link network device to identify the multi-link terminal device and/or at least one link according to the terminal identifier and/or at least one link identifier.

According to a second aspect of the present application, a method for communication is provided. The method includes: receiving, by a multi-link network device, a first frame sent by a multi-link terminal device; wherein the first frame comprises a terminal identifier and/or at least one link identifier; and identifying, by the multi-link network device, the multi-link terminal device and a link according to the terminal identifier and/or the at least one link identifier.

According to a third aspect of the present application, an electronic device is provided. The device includes: at least one processor; and a memory storing at least one program thereon, which when executed by the processor, causes the processor to carry out the method as described with respect to the first aspect; or, the method as described with respect to the second aspect.

According to a fourth aspect of the present application, a computer-readable medium is provided. The computer-readable medium stores a computer program thereon, which when executed by a processor, causes the processor to carry out any one of the methods as described with respect to the first aspect; or, the method as described with respect to the second aspect.

According to various embodiments of the present application, a multi-link terminal device is pre-configured with a terminal identifier and/or at least one link identifier. Before a communication is ready, the multi-link terminal device sends a first frame carrying the terminal identifier or/the at least one link identifier to a multi-link network device. The multi-link network device identifies the multi-link terminal device and a link according to the terminal identifier or/ the at least one link identifier, thereby establishing a corresponding link with the multi-link terminal device. As such, different network access services are provided for the multi-link terminal device. A multi-link connection between the multi-link terminal device and the multi-link network device is achieved. As a result, the network management corresponding to the multi-link network device can be performed to the multi-link terminal device, and the communication security is improved. According to various embodiments of the present application, a multi-link network device is enabled to identify a multi-link terminal device and a link through the setting of a terminal identifier and/or at least one link identifier, to establish a multi-link connection between the multi-link terminal device and the multi-link network device. The multi-link network device is allowed to provide corresponding network access services to the multi-link terminal device based on the connection, and is allowed to manage the multi-link terminal device. In addition, the setting of the terminal identifier and the link identifier can reduce the sniffing and tracking by a third-party device and improve the communication security.

Additional aspects and advantages of the present application will be set forth in part in the description which follows, and in part will be apparent from the description which follows, or may be learned by practice of the present disclosure.

### BRIEF DESCRIPTION OF DRAWINGS

In order to illustrate the technical scheme in the embodiments of the present application, the drawings related to the description of the embodiments or related technologies will be briefly introduced below. It is apparent that, the drawings described below are only some embodiments of the present disclosure. Those having ordinary skills in the art can derive other drawings according to these drawings without devoting creative effort.
FIG. 1 depicts a diagram showing a system architecture of a system where the method for communication method according to an embodiment of the present application may be carried out;
FIG. 2 depicts is a flow chart showing a method for communication performed at a multi-link terminal device, according to an embodiment of the present application;
FIG. 3 depicts is a flow chart showing a method for communication performed at a multi-link terminal device, according to another embodiment of the present application;
FIG. 4 depicts a schematic diagram showing a first target field related to a method for communication according to an embodiment of the present application;
FIG. 5 depicts a schematic diagram showing a first target field related to a method for communication according to another embodiment of the present application;
FIG. 6 depicts a schematic diagram showing a device identifier control bitmap field related to a method for communication according to an embodiment of the present application;
FIG. 7 depicts a schematic diagram showing a device identifier information field related to a method for communication according to an embodiment of the present application;
FIG. 8 depicts a schematic diagram showing a first frame and a fourth frame related to a method for communication according to an embodiment of the present application;
FIG. 9 depicts a schematic diagram showing a second target field related to a method for communication according to an embodiment of the present application;
FIG. 10 depicts a schematic diagram showing a second target field related to a method for communication according to another embodiment of the present application;
FIG. 11 depicts a schematic diagram showing an IRM control bitmap field related to a method for communication according to an embodiment of the present application;
FIG. 12 depicts a flow chart showing the generation of a terminal identifier and/or at least one link identifier at a multi-link terminal device in a method for communication according to an embodiment of the present application;
FIG. 13 depicts a schematic diagram showing the communication between a multi-link terminal device and a multi-link network device according to an embodiment of the present application;
FIG. 14 depicts a flow chart showing the generation of a terminal identifier and/or at least one link identifier at a multi-link terminal device in a method for communication according to another embodiment of the present application;
FIG. 15 depicts a schematic diagram showing the communication between a multi-link terminal device and a multi-link network device according to another embodiment of the present application;
FIG. 16 depicts is a flow chart showing a method for communication performed at a multi-link network device, according to an embodiment of the present application;
FIG. 17 depicts is a flow chart showing a method for communication performed at a multi-link network device, according to another embodiment of the present application;
FIG. 18 depicts a flow chart showing the generation of a terminal identifier and/or at least one link identifier at a multi-link network device in a method for communication according to an embodiment of the present application;
FIG. 19 depicts a flow chart showing the generation of a terminal identifier and/or at least one link identifier at a multi-link network device in a method for communication according to another embodiment of the present application; and
FIG. 20 depicts a schematic diagram showing an electronic device to which a method for communication is applied according to an embodiment of the present application.

### DETAILED DESCRIPTION

The purpose, technical scheme and advantages of the present invention will become apparent through the following description for various embodiments in conjunction with the drawings. It should be understood that the embodiments described here are intended for illustration but not limitation of the present invention.

It shall be noted that, in some cases, the operations shown or described may be performed in a different order than the logical order shown in the flowcharts. It should be noted that the terms "first" and "second", if used in the description, the claims and the drawings are intended to distinguish similar objects, and do not necessarily imply any specific order or sequence.

It should also be understood that references to "one embodiment" or "some embodiments" etc. described in the description of some embodiments of the present application mean that specific features, structures or characteristics described in conjunction with this embodiment are included in one or more embodiments of the present application. Thus, the phrases "in one embodiment", "in some embodiments", "in other embodiments" and "in further embodiments" appearing in different places in this description do not necessarily all refer to the same embodiment, but mean "one or more but not all embodiments" unless otherwise emphasized. The terms "include", "contain", "having" and their variations all mean "including but not limited to" unless otherwise specifically emphasized.

In the description of embodiments of the present application, the terms "greater than", "less than", "more than", etc. shall be understood to exclude the number being referred to; and the terms "above", "below", "within", etc. shall be understood to include the number being referred to. Term "first" and "second" if described, are intended for distinguishing technical features, which shall not be understood as indicating or implying relative importance or implicitly indicating the number of the indicated technical features or the order of the indicated technical features. It should be understood that the description with respect to the orientations, such as the terms "up", "down", "front", "rear", "left", "right", indicate the orientation or position relationship based on the orientation or position relationship shown in the drawings, and are only for the convenience of describing the present invention and simplifying the description, rather than indicating or implying that the device or component referred to must have a specific orientation, be constructed and operated in a specific orientation. And thus, those terms shall not be understood as a limitation to the present application.

In the description of various embodiments of the present application, the terms such as provide, mount or connect should be broadly understood, unless otherwise specified, and those having ordinary skills in the art can reasonably determine the specific meanings of the above terms in various embodiments of the present disclosure in conjunction with the specific contents of the technical scheme.

During the communication, the terminal device typically employs a unique and fixed MAC address to establish a connection with network equipment. The identification and authentication technologies based on device fixed MAC address have been widely utilized in the field of wireless transmission. However, the utilization of fixed MAC addresses can allow a third-party device to employ MAC address sniffing technology to track and locate the connection between a terminal device and a network device. Multi-link operation (MLO) technology, for example, is introduced in wireless network technology. In MLO, MAC addresses include link-specific MAC addresses (Link MAC addresses ) and MLD MAC addresses (Multi-link device MAC address). Based on the differences in the MAC address information carried, frames used for multi-link terminal device identification are usually divided into three categories: frames carrying only link-specific MAC addresses; frames carrying both the current link-specific MAC address and the MLD MAC address; frames carrying both the current link-level MAC address, another link-specific MAC addresses, and the MLD MAC address. A third-party device can track and locate the communication process based on the link-specific MAC address and the MLD- MAC address.

To solve this problem, in some related technical schemes, a user is allowed to use a random MAC address (RMA) before a terminal device accesses a network device. However, the random MAC address technology of terminal devices has caused the failure of device MAC address-related functions defined by the Wi-Fi Alliance (WFA) and the Wi-Fi Broadband Alliance (WBA), resulting in failures in network management for devices.

In view of this, embodiments of the present application provides a method for communication, a network device and a storage medium. In the method according to various embodiments of the present application, a multi-link network device is enabled to identify a multi-link terminal device and a link through the setting of a terminal identifier and/or at least one link identifier, to establish a multi-link connection between the multi-link terminal device and the multi-link network device. The multi-link network device is allowed to provide corresponding network access services to the multi-link terminal device based on the connection, and is allowed to manage the multi-link terminal device. In addition, the setting of the terminal identifier and the link identifier can reduce the sniffing and tracking by a third-party device and improve the communication security.

Some embodiments of the present application will be illustrated in conjunction with the drawings.

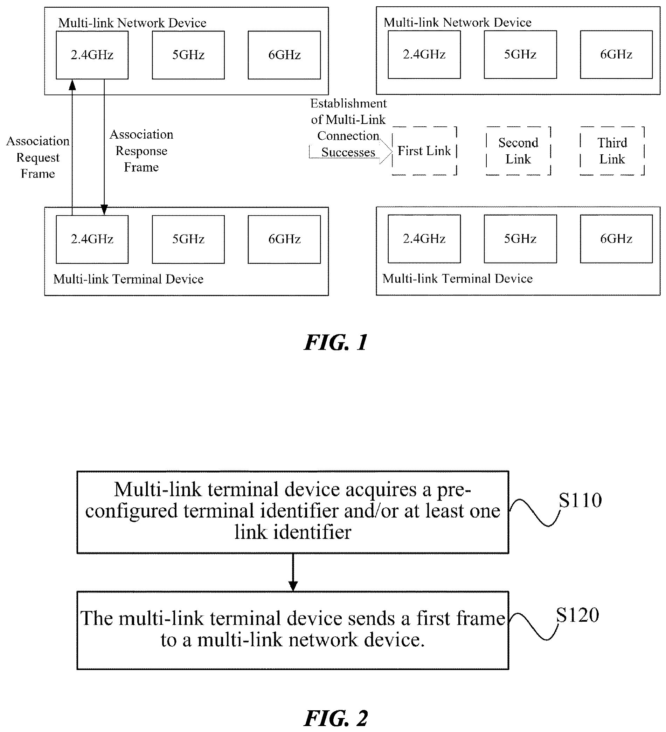

FIG. 1 depicts a diagram showing a system architecture of a system where the method for communication method according to an embodiment of the present application may be carried out. The system architecture includes a multi-link terminal device and a multi-link network device.

The multi-link network device is a device that is configured to receive a first frame sent by one or more multi-link terminal devices, and is capable of identifying the multi-link terminal devices and the links according to a terminal identifier and/or at least one link identifier. The multi-link network device is configured to wirelessly connect with the multi-link terminal device for data transfer.

The multi-link network device is a wireless network access device, also known as a wireless access point, which is a key device in wireless local area networks. The multi-link network device can receive signals from a wired network and transmit the received signal wirelessly, so that the multi-link terminal device can be connected to the network wirelessly. In addition, the multi-link network device allows connections with a plurality of terminal devices, and provides high-speed and stable network services. The operating principle of a wireless network access device is to convert wired network signals into wireless signals, and transmit data through the wireless signals. In wireless networks, wireless network access devices act as a relay station, which receives data from wireless devices and then transmits the data to wired networks. At the same time, wireless network access devices can also receive data from wired networks, and then convert the data into wireless signals and transmit them to wireless devices.

The multi-link terminal device is a device that is configured to acquire a pre-configured terminal identifier and/or at least one link identifier and sends a first frame to the multi-link network device. The multi-link terminal device is enabled to establish a communicative connection with the multi-link network device for data transfer. A plurality of links can be established between the multi-link terminal device and the multi-link network device on demand.

It should be noted that each of the multi-link terminal device and the multi-link network device includes three links at 2.4 GHz, 5 GHz and 6 GHz. The multi-link terminal device and the multi-link network device can complete the authentication, connection and four-way handshake process over the 2.4 GHz link through the Association Request frame and the Association Response frame, thereby realizing multi-link connection, that is, being able to transmit data on the three links at 2.4 GHz, 5 GHz and 6 GHz.

It should be noted that the multi-link terminal device and the multi-link network device can realize multi-link connection. The application system shown in FIG. 1 is only a schematic diagram. The multi-link connection between the multi-link terminal device and the multi-link network device includes a connection of at least one link.

It should be noted that the multi-link terminal device and the multi-link network device are just a general term. In the actual communication process, a plurality of multi-link terminal devices and a plurality of multi-link network devices can be provided.

The system architecture and application scenarios described in an embodiment of the present application are intended for better understanding of rather than limitations to the technical scheme of various embodiments of the present application. It is known to those having ordinary skills in the art that, with the evolution of the system architecture and the emergence of new application scenarios, the technical scheme provided by the embodiment of the present disclosure is also applicable to similar technical problems.

It can be understood by those having ordinary skills in the art that the system architecture shown in FIG. 1 is not intended to limit the embodiments of the present application, and may include more or less components than those shown, or some components may be combined, or have different arrangements of components.

In the system architecture shown in FIG. 1, each unit can call the program(s) for communication stored thereon to carry out the method for communication.

Various embodiments of the method for communication method of the present application are proposed based on the above system architecture.

FIG. 2 depicts is a flow chart showing the method for communication performed at a multi-link terminal device, according to an embodiment of the present application. According to a non-limiting embodiment, the communication method includes the following operations.

At operation S110, a multi-link terminal device obtains a pre-configured terminal identifier and/or at least one link identifier.

At operation S120, the multi-link terminal device sends a first frame to a multi-link network device. The first frame includes the terminal identifier and/or the at least one link identifier, to allow the multi-link network device to identify the multi-link terminal device and/or a link according to the terminal identifier and/or at least one link identifier.

In some implementations, a multi-link terminal device obtains a pre-configured terminal identifier and/or at least one link identifier. The terminal identifier corresponds to the multi-link terminal device, and each of the link identifier corresponds to a respective one of a plurality of links. The multi-link terminal device sends a first frame to the multi-link network device. The first frame includes a terminal identifier and/or at least one link identifier. The multi-link network device identifies the multi-link terminal device and/or the link(s) through the terminal identifier and/or at least one link identifier. Thereby, a multi-link connection is established, such that, the concurrent data transmission over multiple links is allowed. Corresponding network access service is provided to the respective multi-link terminal device based on the multi-link connection. The multi-link terminal devices are managed. In addition, the setting of the terminal identifier and the link identifier can reduce the sniffing and positioning by a third-party device and the connection security is improved.

In an embodiment, the multi-link network device identifies the multi-link terminal device and/or the link through the terminal identifier and/or at least one link identifier, and feeds back identification result information to the multi-link terminal device. The multi-link network device provides feedback to the multi-link terminal device when the multi-link terminal device and/or the link of the multi-link terminal device is successfully identified by the multi-link network device. As a result, the multi-link terminal device can send a connection request to the multi-link network device for establishing a multi-link connection between the multi-link network device and the multi-link terminal device, to allow the concurrent data transmission over a plurality of links. The establishment of the multi-link connection can provide corresponding network access services for the multi-link terminal device.

It should be noted that multi-link connection allows the concurrent data transmission between the multi-link network device and multi-link terminal device over the plurality of links, thereby improving data transmission throughput, reducing data transmission latency, and thus improving communication efficiency.

It should be noted that a terminal identifier corresponds to one multi-link terminal device among a plurality of multi-link terminal devices. The multi-link network device can identify the multi-link terminal devices based on the terminal identifiers. Each of the at least one link identifier corresponds a respective one of a plurality of links for connection with a multi-link terminal device. The multi-link network device can identify a respective link based on one of the link identifiers, thereby establishing a respective link connection with a multi-link terminal device.

It should be noted that in multi-link operation technology, MAC addresses can include link-specific MAC addresses and Multi-Link Device (MLD) MAC addresses. A multi-link terminal device usually includes a unique MLD MAC address and at least one link-specific MAC address. The MLD MAC address uniquely identifies a multi-link terminal device. Therefore, the multi-link terminal device corresponds to a link identifier, and the multi-link network device can identify the only corresponding multi-link terminal device through the link identifier. In addition, the link-specific MAC addresses of one multi-link terminal device are different, but one of the link-specific MAC addresses of the multi-link terminal device may be the same as the MLD MAC address. Therefore, the link identifiers corresponding to multiple links of one multi-link terminal device are different, and one of the link identifiers may be the same as the terminal identifier. When the frame used for multi-link terminal device identification carries only the link-specific MAC address(es), the first frame only carries the link identifier(s), and when the link identifier is the same as the terminal identifier, the first frame only carries the terminal identifier or the link identifier. When a frame used for multi-link terminal device identification carries a link specific MAC address of the current link and an MLD MAC address, the first frame carries one terminal identifier and one link identifier. When a frame used for multi-link terminal device identification carries a link specific MAC address of the current link, a link-specific MAC address of another link, and an MLD MAC address, the first frame carries a terminal identifier and a plurality of link identifiers.

It should be noted that the terminal identifier and the link identifier can be configured by a multi-link terminal device or a multi-link network device.

It should be noted that the first frame is encrypted and transmitted between the multi-link terminal device and the multi-link network device. Therefore, it's not easy if not impossible for a third-party device to sniff and track the terminal identifier and link identifier carried by the first frame, thereby improving the of communication security.

It should be noted that before the multi-link terminal device sends the first frame to the multi-link network device, the multi-link network device receives the terminal identifier and/or at least one link identifier sent by the multi-link terminal device, and stores the terminal identifier and/or at least one link identifier locally or in another multi-link network device associated with the local area. The terminal identifier and link identifier correspond to those carried in the first frame, such that the multi-link network device can identify the terminal identifier and link identifier subsequently.

It should be noted that the first frame is a frame sent by a multi-link terminal device to a multi-link network device. Typically, the frame is intended to request a connection with the multi-link network device. For example, the first frame can be an association request frame in the Fast Initial Link Setup (FILS) mode.

It should be noted that the encrypted transmission of the first frame can be achieved through a key. In an implementation, the multi-link terminal device and the multi-link network device generate a multi-link operation-specific pairwise transient key (PTK) and a link-specific group temporary key (GTK) through a four-way handshake on a link, which are used to encrypt and decrypt the transmitted unicast data frames and multicast data frames, respectively, to ensure the security of data transmission.

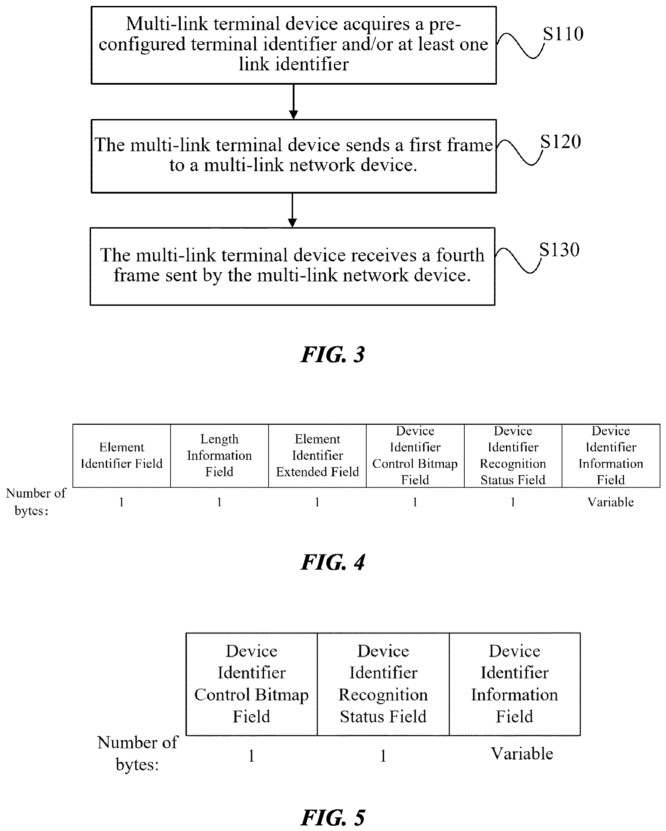

Referring to FIG. 3 , according to a non-limiting embodiment, the method for communication method further includes the following operations.

At operation S130, the multi-link terminal device receives a fourth frame sent by the multi-link network device. The fourth frame is a response frame to the first frame.

It should be noted that after receiving the first frame, the multi-link network device identifies the terminal identifier and the link identifier, in order to determine whether the same terminal identifier and link identifier are stored in the locally in the multi-link network device or the network corresponding to the multi-link network device. Then, the multi-link network device generates a fourth frame based on the determination, and sends the fourth frame to the multi-link terminal device. Thus, the fourth frame is a response frame to the first frame. When the fourth frame indicates that the same terminal identifier and link identifier are stored locally of the multi-link network device or in the network associated with the local network, the multi-link terminal device establishes a multi-link connection with the multi-link network device and performs data transmission. Otherwise, the establishment of the connection between the multi-link terminal device and the multi-link network device fails.

Referring to FIGS. 4 and 5, one or both of the first frame and the fourth frame contain a first target field. The terminal identifier contains a device identifier. The first target field includes a device identifier information field that contains the terminal identifier and/or at least one link identifier.

It should be noted that the terminal identifier of the multi-link terminal device can be set as a device ID, which is a device ID of the multi-link terminal device. The multi-link network device can obtain the ID of the multi-link terminal device by identifying the device ID.

It should be noted that the link identifier may also be indicated by the device identifier, and each link identifier is provided with a corresponding device identifier.

In an embodiment, the first frame and the fourth frame each contains a first target field, which is schematically shown with reference to FIG. 4 or FIG. 5. The first target field includes a device identifier information field (device ID info.), and the terminal identifier and/or at least one link identifier are carried in the device identifier information field. The device identifier information field may carry a plurality of different device identifiers. The number of bytes (octets) of the device identifier information field is variable, and its specific number can be set according to the number of terminal identifiers and link identifiers.

It can be understood that, referring to FIG. 4 and FIG. 5, the first target field further includes a device identifier recognition status field that is indicative of whether the device identifier of the multi-link terminal device is recognized.

It should be noted that the first target field also includes a device identifier recognition status field (Device ID Status), which is indicative whether the device identifier of the multi-link terminal device is recognized.

It should be noted that the device identifier recognition status field is designed to take up one (1) bit. When the value of device identifier recognition status field is "0", it is indicated unrecognized device identifier of the multi-link terminal device. When the value of device identifier recognition status field is "1", it is indicated recognized device identifier of the multi-link terminal device.

It should be noted that the fourth frame received by the multi-link terminal device is a response frame to the first frame sent by the multi-link network device. When the multi-link network device recognizes the terminal identifier of the multi-link terminal device, the value of device identifier recognition status field is set to "1". In this case, the multi-link network device and the multi-link terminal device can establish a connection. When the multi-link network device fails to recognize the terminal identifier of the multi-link terminal device, the value of device identifier recognition status field is set to "0". In this case, the establishment of the connection between the multi-link network device and the multi-link terminal device fails.

In some embodiments, referring to FIGS. 4 to 6 , the first target field further includes a device identifier control bitmap field that includes one or more of the following fields:
- a device identifier recognition status tag, which is indicative of whether the first target field includes a device identifier recognition status field;
- a device identifier tag, which is indicative of whether the device identifier information field contains the device identifier;
- a plurality of link tags each of which is indicative of whether the device identifier information field contains a corresponding link identifier; and
- a device and link identifier sharing indicator tag, which is indicative of whether the device identifier and the link identifier have the same value.

It should be noted that the first target field further includes a device ID control bitmap field, which is compatible with the multi-link operation technology. The setting of the device ID control bitmap field provides a basis for the multi-link connection between the multi-link terminal device and the multi-link network device.

It should be noted that the device identifier recognition status tag (Device ID Status) is indicative of whether the first target field includes the device identifier recognition status field. The device identifier recognition status tag takes up 1 bit. When the value of device identifier recognition status tag is "0", it is indicated the first target field does not include the device identifier recognition status field. When the value of the device identifier recognition status tag is "1", it is indicated the first target field includes the device identifier recognition status field.

In an embodiment, a multi-link terminal device sends a first frame to a multi-link network device. Although the first frame contains a terminal identifier and/or at least one link identifier, the terminal identifier in the first frame is pre-configured, and the device identifier in the terminal identifier is the device identifier of the multi-link terminal device. In this case, the first target field of the first frame does not include a device identifier recognition field, and accordingly the value of device identifier recognition status tag is correspondingly set to "0".

It should be noted that the fourth frame is a response frame to the first frame. After identifying the multi-link terminal device according to the terminal identifier carried in the first frame, the multi-link network device generates and sends a fourth frame to the multi-link terminal device. In this case, the first target field corresponding to the fourth frame includes a device identifier recognition field, and the value of the device identifier recognition status tag is "1".

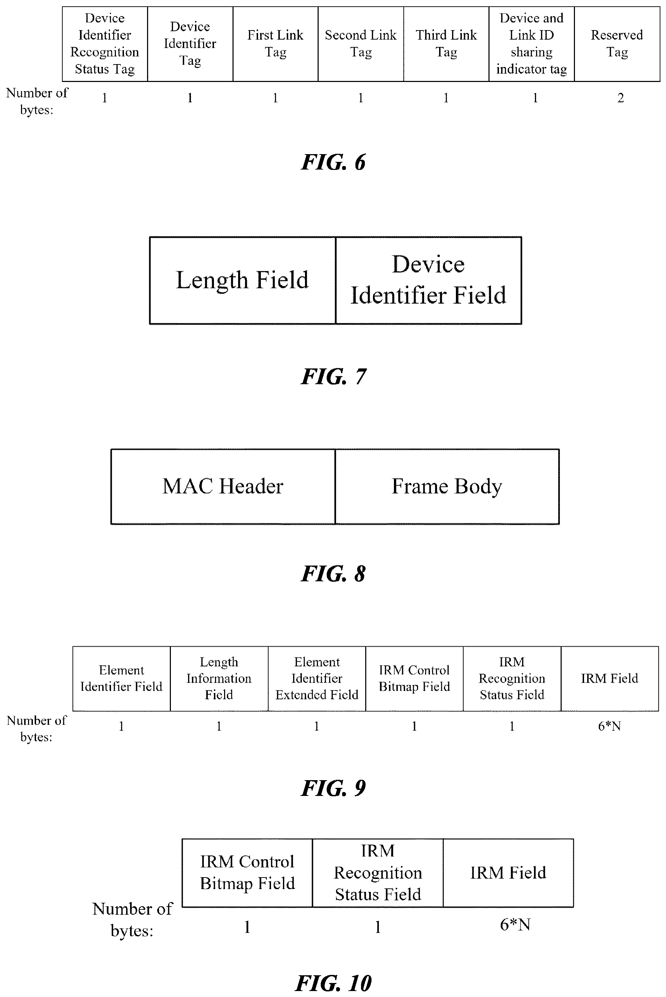

In an embodiment, referring to FIG. 6, the plurality of link tags are the first link tag (1st. link ID), the second link tag (2nd. link ID) and the third link tag(3rd. link ID). Each link tag corresponds to a respective link, and is indicative of whether the device identifier recognition information field contains the link identifier of the respective link. When the value of the link tag is "1", it indicates that the subsequent device identifier information field contains the corresponding link identifier. When the value of the link tag is "0", it indicates that the device identifier information field does not contain the corresponding link identifier.

It should be noted that the device identifier control bitmap field shown in FIG. 6 is provided with three link tags, i.e., the first link tag, the second link tag and the third link tag, and each link tag takes up 1 bit. In an embodiment, a multi-link terminal device and a multi-link network device each includes three links, i,e., a first link, a second link and a third link. The multi-link terminal device and the multi-link network device can be connected through any one or more of the three links. Each of the first link, the second link and the third link is assigned with a respective link identifier. For the first frame, when the value of a link tag is "1", it indicates that the multi-link terminal device expects to establish a connection with the multi-link network device over the corresponding link. For example, when the values of the first link tag and the second link tag in the first target field of the first frame are "1" and the value of the third link tag is "0", it indicate that the device identifier information field only includes the link identifiers corresponding to the first link and the second link, and the multi-link terminal device expects to establish a connection with the multi-link device over the first link and the second link. For the fourth frame, the values of the link tags in the first target field correspond to those carried in the first frame. When the value of the recognition state field is "1", it indicates that the device identifier of the multi-link terminal device can be identified by the multi-link network device.

It should be noted that if the multi-link network device is identified successfully and the device identifier of the multi-link terminal device can be identified by the multi-link network device, then the value of the recognition status field of the fourth frame is set to "1". Based on this, the multi-link terminal device can send a connection request to the multi-link network device, such that the multi-link terminal device and the multi-link network device establishes a connection between the corresponding links and realize a multi-link connection.

It should be noted that the device identifier control bitmap field in FIG. 6 is shown only by way of an example, and more or less link tags can be provided. The number of link tags in the device identifier control bitmap field is determined by the number of links between the multi-link terminal device and the multi-link network device.

It should be noted that the device identifier control bitmap field includes a device and link identifier sharing indicator tag, which takes up 1 bit and is indicative of whether the device identifier and the link identifier share the same value. In the multi-link operation technology, one of the link-specific MAC addresses of the multi-link terminal device may be the same as the MLD MAC address. Therefore, the link identifiers corresponding to the links of the same multi-link terminal device are different, but one of the link identifiers may also be the same as the terminal identifier. When the device identifier and the link identifier are the same, the value of the device and link identifier sharing indicator tag is "1", otherwise it is "0".

In an embodiment, the device and link identifier sharing indicator is implicit. Specifically, the communication protocol stipulates that the terminal identifier and the link identifier are the same. Therefore, it is not necessary to particularly set the device and link identifier sharing indicator in the first target field under the protocol.

In an embodiment, referring to FIG. 6 , the device identifier control bitmap field further includes a reserved tag ("Reserved"), which takes up 2 bits.

In an embodiment, referring to FIG. 7 , the device identifier information field includes a length field and a device identifier field.

It should be noted that the device identifier information field includes a length field (length) and a device identification field (Device ID). The device identifier field is intended to store the device identifier of the multi-link terminal device, and the length field is indicative of the bit length of the device identifier of the multi-link terminal device.

In an embodiment, referring to FIG. 8, the first frame and the fourth frame each include a media access control (MAC) header and a frame body. The first target field is carried in the MAC header or the frame body, and is a device identifier element field or a device identifier key data encapsulation field.

It should be noted that the first frame and the fourth frame each includes an MAC header and a frame body. The first target field is carried in the frame body or the MAC header. The first target field is a device identifier element field or a device identifier key data encapsulation field.

It should be noted that when the terminal identifier and the link identifier are the same, the terminal identifier is carried in the Transmitter Address (TA) or Receiver Address (RA) field of the MAC header. When the terminal identifier and the link identifier are different, the terminal identifier is carried in the frame body, and the link identifier is carried in the TA or RA field of the MAC header.

In an embodiment, referring to FIG. 4, the device identifier element field includes an element identifier field (Element ID), a length information field (Length), an element identifier extension field (Element ID Extension), a device identifier control bitmap field (Device ID control bitmap), a device identifier recognition status field (Device ID Status) and a device identifier information field (Device ID info.). In an embodiment, the element identifier field, the length information field, the element identifier information extension field, the device identifier control bitmap field, and the device identifier recognition status field each takes up one byte, and the number of bytes of the device identifier information field is set to be variable.

In an embodiment, referring to FIG. 5, during the transmission of the first frame and the fourth frame, in order to improve the security of information transmission, the device identifier element field is usually encrypted for transmission. After the device identifier element field is encrypted, the device identifier key data encapsulation field is obtained. The device identifier key data encapsulation field includes a device identifier control bitmap field (Device ID control bitmap), a device identifier recognition status field (Device ID Status), and a device identifier information field (Device ID info.). In an embodiment, the device identifier control bitmap field, and the device identifier recognition status field each takes up one byte, and the number of bytes of the device identifier information field is set to be variable.

It should be noted that, referring to FIGS. 6 and 7, the structures and uses of the device identifier control bitmap field, the device identifier recognition status field and the device identifier information field in the device identifier element field and the device identifier key data encapsulation field are respectively the same. The device identifier control bitmap field includes a device identifier recognition status tag, a device identifier tag, a plurality of link tags, a device and link identifier sharing indicator tag. and a reserved tag. Each device identifier information field include a length field and a device identifier field.

In an embodiment, referring to FIGS. 9 and 10, the first frame and/or the fourth frame includes a second target field. The terminal identifier includes an Identifiable Random MAC (IRM) Address (IRMA). The second target field includes an IRM field that carries the terminal identifier and/or at least one link identifier.

It should be noted that the terminal identifier of the multi-link terminal device can be set as an IRMA. The IRMA is a media access control address randomly assigned to the multi-link terminal device. The multi-link network device can obtain the media access control address of the multi-link terminal device through the IRMA, thereby establishing a connection with the multi-link terminal device.

It should be noted that a link identifier may also be indicated by an IRMA. Each link identifier is assigned with a corresponding IRMA.

In an embodiment, the first frame and the fourth frame each contains a second target field, which is schematically shown with reference to FIG. 9 or FIG. 10. The second target field includes an IRM field. The terminal identifier and/or at least one link identifier are carried in the IRM field. The IRM field may carry a plurality of different IRMs. The number of bytes (Octets) of the IRM field is 6*N, where the number "6" is the number of bytes of one IRM, and "N" is the total number of terminal identifiers and link identifiers carried by the first frame and/or the fourth frame, i.e., the total number of the IRMs. The setting of the number of bytes of the IRM field allows the first frame and/or the fourth frame to carry a terminal identifier and/or at least one link identifier.

In an embodiment, referring to FIG. 9 and FIG. 10, the second target field further includes an IRM recognition status field that is indicative of whether the IRM of a multi-link terminal device is recognized.

It should be noted that the second target field also includes an IRM recognition status field (Device ID Status), which is indicative whether the IRM the multi-link terminal device is recognized.

It should be noted that the IRM recognition status field is designed to take up one (1) bit. When the value of the IRM recognition status field is "0", it is indicated unrecognized IRM of the multi-link terminal device. When the value of device identifier recognition status field is "1", it is indicated recognized IRM of the multi-link terminal device.

It should be noted that the fourth frame received by the multi-link terminal device is a response frame to the first frame sent by the multi-link network device. When the multi-link network device recognizes the IRM of the multi-link terminal device, the value of the IRM recognition status field is set to "1". When the multi-link network device fails to recognize the IRM of the multi-link terminal device, the value of the IRM recognition status field is set to "0".

In some embodiments, referring to FIGS. 9 to 11 , the second target field further includes an IRM control bitmap field that includes one or more of:
- an IRM recognition status tag, which is indicative of whether the second target field includes an IRM recognition status field;
- an IRM tag, which is indicative of whether an IRM field contains an IRM;
- a plurality of link tags, which are indicative of whether the IRM field carries a corresponding link identifier; and
- an IRM and link identifier sharing indicator tag, which is indicative of whether the IRM and link identifier share a same value.

It should be noted that the second target field further includes an IRM control bitmap field, which is compatible with the multi-link operation technology. The setting of the IRM control bitmap field provides a basis for the multi-link connection between the multi-link terminal device and the multi-link network.

It should be noted that the IRM recognition status tag (IRM ID Status) is indicative of whether the second target field includes an IRM recognition status field. The IRM recognition status tag takes up 1 bit. When the value of the IRM recognition status tag is "0", it is indicated the second target field does not include the IRM recognition status field. When the value of the IRM recognition status tag is "1", it is indicated the second target field includes the IRM recognition status field.

In an embodiment, a multi-link terminal device sends a first frame to a multi-link network device. Although the first frame contains a terminal identifier and/or at least one link identifier, the terminal identifier in the first frame is pre-configured, and the device identifier in the terminal identifier is the device identifier of the multi-link terminal device. In this case, the second target field of the first frame does not include an IRM recognition field, and accordingly the value of the IRM recognition status tag is correspondingly set to "0".

It should be noted that the fourth frame is a response frame to the first frame. After identifying the multi-link terminal device according to the terminal identifier carried in the first frame, the multi-link network device generates and sends a fourth frame to the multi-link terminal device. In this case, the second target field corresponding to the fourth frame includes an IRM recognition field, and the value of the IRM recognition status tag is "1".

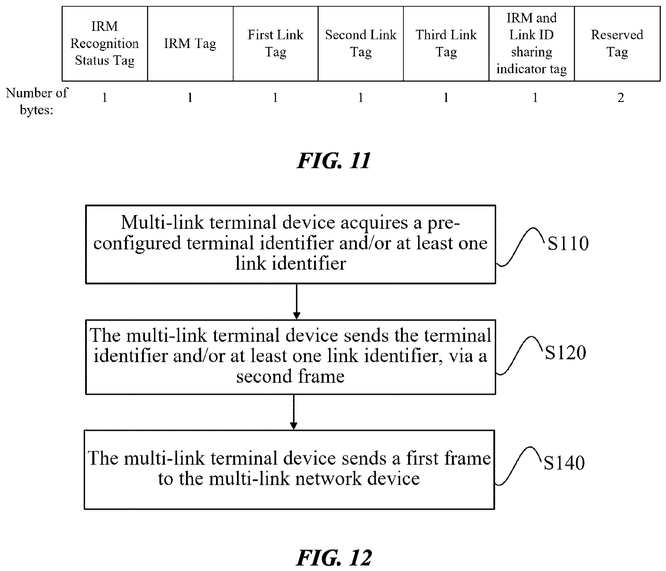

In an embodiment, referring to FIG. 11, the plurality of link tags are the first link tag (1st. link ID), the second link tag (2nd. link ID) and the third link tag(3rd. link ID). Each link tag corresponds to a respective link, and is indicative of whether the IRM field contains the link identifier of the respective link. When the value of the link tag is "1", it indicates that the subsequent IRM field contains the corresponding link identifier. When the value of the link tag is "0", it indicates that the IRM field does not contain the corresponding link identifier.

It should be noted that the IRM control bitmap field shown in FIG. 11 is provided with three link tags, i.e., the first link tag, the second link tag and the third link tag, and each link tag takes up 1 bit. In an embodiment, a multi-link terminal device and a multi-link network device each includes three links, i.e., a first link, a second link and a third link. The multi-link terminal device and the multi-link network device can be connected through any one or more of the three links. Each of the first link, the second link and the third link is assigned with a respective link identifier. For the first frame, when the value of a link tag is "1", it indicates that the multi-link terminal device expects to establish a connection with the multi-link network device over the corresponding link. For example, when the values of the first link tag and the second link tag in the second target field of the first frame are "1" and the value of the third link tag is "0", it indicate that the IRM field only includes the link identifiers corresponding to the first link and the second link, and the multi-link terminal device expects to establish a connection with the multi-link device over the first link and the second link. For the fourth frame, the values of the link tags in the second target field correspond to those carried in the first frame. When the value of the recognition state field is "1", it indicates that the IRM of the multi-link terminal device can be identified by the multi-link network device.

It should be noted that if the multi-link network device is identified successfully and the device identifier of the multi-link terminal device can be identified by the multi-link network device, then the value of the recognition status field of the fourth frame is set to "1". Based on this, the multi-link terminal device can send a connection request to the multi-link network device, such that the multi-link terminal device and the multi-link network device establishes a connection between the corresponding links and realize a multi-link connection.

It should be noted that, the IRM control bitmap field in FIG. 11 is shown only by way of an example, and more or less link tags can be provided. The number of link tags in the IRM control bitmap field is determined by the number of links between the multi-link terminal device and the multi-link network device.

It should be noted that the IRM control bitmap field includes an IRM and link identifier sharing indicator tag, which takes up 1 bit and is indicative of whether the IRM and the link identifier share the same value. In the multi-link operation technology, one of the link-specific MAC addresses of the multi-link terminal device may be the same as the MLD MAC address. Therefore, the link identifiers corresponding to the links of the same multi-link terminal device are different, but one of the link identifiers may also be the same as the terminal identifier. When the terminal identifier and the IRM corresponding to a link identifier are the same, the value of the IRM and link identifier sharing indicator tag is "1", otherwise it is "0".

In an embodiment, the IRM and link identifier sharing indicator is implicit. Specifically, the communication protocol stipulates that the terminal identifier and the link identifier are the same. Therefore, it is not necessary to particularly set the IRM and link identifier sharing indicator in the second target field under the protocol.

In an embodiment, referring to FIG. 11 , the IRM control bitmap field further includes a reserved tag ("Reserved"), which takes up 2 bits.

In an embodiment, referring to FIG. 8, the first frame and the fourth frame each include a media access control (MAC) header and a frame body. The second target field is carried in the MAC header or the frame body, and is an IRM element field or an IRM key data encapsulation field.

It should be noted that the first frame and the fourth frame each includes an MAC header and a frame body. The second target field is carried in the frame body or the MAC header. The second target field is an IRM element field or an IRM key data encapsulation field.

It should be noted that when the terminal identifier and the link identifier in the second target field are the same, the terminal identifier is carried in the Transmitter Address (TA) or Receiver Address (RA) field of the MAC header. When the terminal identifier and the link identifier are different, the terminal identifier is carried in the frame body, and the link identifier is carried in the TA or RA field of the MAC header.

In an embodiment, referring to FIG. 9, the IRM element field includes an element identifier field (Element ID), a length information field (Length), an element identifier extension field (Element ID Extension), an IRM control bitmap field (IRM control bitmap), an IRM recognition status field (IRM Status) and an IRM information field (IRM info.). In an embodiment, the element identifier field, the length information field, the element identifier information extension field, the IRM control bitmap field, and the IRM recognition status field each takes up one byte. The number of bytes of the IRM field is set to be 6*N, where N denotes the number of IRMs.

In an embodiment, referring to FIG. 10, during the transmission of the first frame and the fourth frame, in order to improve the security of information transmission, the IRM element field is usually encrypted for transmission. After the IRM element field is encrypted, the IRM key data encapsulation field is obtained. The IRM key data encapsulation field includes an IRM control bitmap field (IRM control bitmap), an IRM recognition status field (IRM Status), and an IRM field (IRM info.). In an embodiment, the IRM control bitmap field, and the IRM recognition status field each takes up one byte, and the number of bytes of the IRM field is set to be variable.

It should be noted that, referring to FIG. 11, the structures and uses of the IRM control bitmap field, the IRM recognition status field and the IRM information field in the IRM element field and the IRM key data encapsulation field are respectively the same. The IRM control bitmap field includes an IRM recognition status tag, an IRM identifier tag, a plurality of link tags, an IRM and link identifier sharing indicator tag, and a reserved tag.

In an embodiment, the terminal identifier and/or at least one link identifier is generated by the multi-link terminal device. Referring to FIG. 12, according to a non-limiting embodiment, before operation S120, the method further includes the following operations.

At operation S140, the multi-link terminal device sends a terminal identifier and/or at least one link identifier to the multi-link network device via a second frame.

In an embodiment, before sending the first frame to the multi-link network device, the multi-link terminal device sends the terminal identifier and/or at least one link identifier to the multi-link network device through the second frame. The multi-link network device stores the terminal identifier and/or at least one link identifier carried by the second frame locally or on another multi-link network device associated with the local area, such that the multi-link network device can subsequently identify the terminal identifier and the link identifier(s).

In an embodiment, the second frame includes at least one of, a second authentication frame during a four-way handshake process between the multi-link terminal device and the multi-link network device; a fourth authentication frame during the four-way handshake process between the multi-link terminal device and the multi-link network device; a (re)association request frame during the fast initial link setup (FILS) process between the multi-link terminal device and the multi-link network device; a first authentication frame during a Pre-Association Security Negotiation (PASN) three-way handshake process between the multi-link terminal device and the multi-link network device; or a third authentication frame during the PSAN three-way handshake process between the multi-link terminal device and the multi-link network device.

It should be noted that the four-way handshake protocol is intended for negotiation of unicast keys, with the main purpose for ensuring that the keys obtained by the applicant and the authenticator are the same and the latest. The required Pairwise Transient Key (PTK) can be generated by a four-way handshake, and the process is as follows: the multi-link network device sends the first authentication frame in the four-way handshake to the multi-link terminal device. The multi-link terminal device sends the second authentication frame in the four-way handshake to the multi-link network device. Upon receiving the second authentication frame in the four-way handshake, the multi-link network device generates the PTK at the multi-link network device side and responds to the multi-link terminal device with the third authentication frame in the four-way handshake. Upon receiving the third authentication frame in the four-way handshake, the multi-link terminal device generates the PTK at the multi-link terminal device side, and responds to the multi-link network device with the fourth authentication frame in the four-way handshake. Thereby, the second frame includes the second authentication frame and the fourth authentication frame in the four-way handshake process between the multi-link terminal device and the multi-link network device.

In an embodiment, the (re)association request frame of the multi-link terminal device and the multi-link network device during the establishment of FILS is also the second frame. The FILS is mainly intended to accelerate the establishment of the connection between the multi-link terminal device and the multi-link network device. FILS is defined in 802.11ai, which enables a wireless access point, e.g., the multi-link network device, to periodically send discovery frames with a period of 20 milliseconds, which is shorter compared with the period of a beacon, to allow the multi-link terminal device to discover multi-link network devices more quickly. In addition, the (re)association of FILS includes Dynamic Host Configuration Protocol (DHCP) information, which allows the configuration of the address to complete along with the association.

In an embodiment, the third frame includes the third authentication frame in the PSAN three-way handshake process between the link terminal device and the multi-link network device.

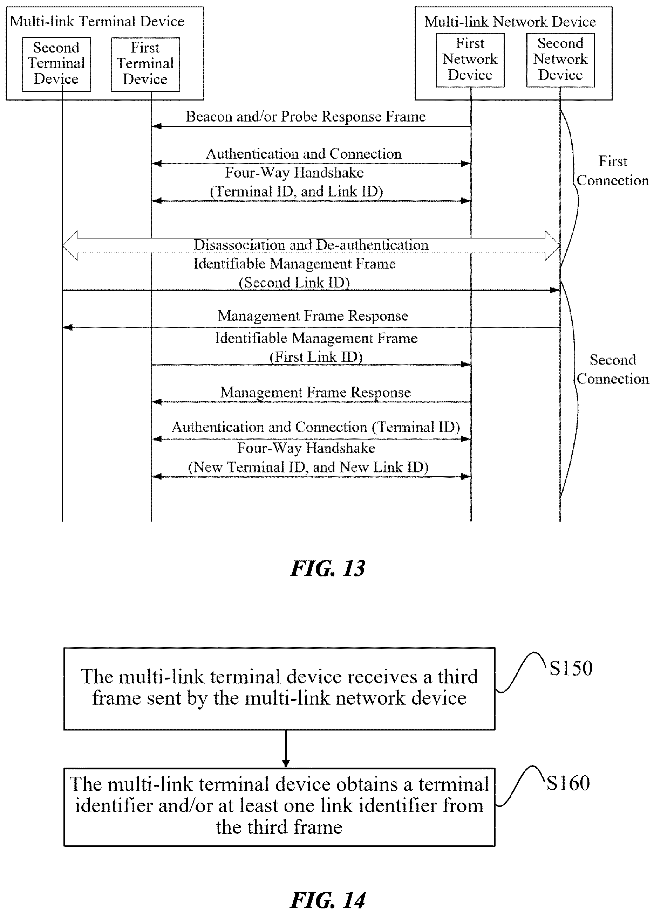

In an embodiment, referring to FIG. 13, during the first connection process, a first terminal device among a plurality of multi-link terminal devices discovers a multi-link network device that supports the multi-link operation technology by receiving a beacon and/or a probe response frame. The multi-link terminal device and the multi-link network device complete the multi-link authentication and connection through the multi-link authentication and connection processes. During the four-way handshake process, the frame (i.e., the second frame) sent by the first terminal device among a plurality of multi-link terminal devices to the first network device contains a terminal identifier and/or at least one link identifier. After receiving the terminal identifier and/or at least one link identifier, the first network device among the multi-link network devices stores the identifiers locally or on another multi-link network device associated with the local area. After completing the communication with the multi-link network device, the multi-link terminal device disconnects through the disassociation and de-authentication processes. During the second connection process, the multi-link terminal device sends an identifiable management frame that may carry a second link identifier to the multi-link network device, over a second link, i.e., the link connecting the second network device and the second terminal device. After receiving the management frame over the second link, the multi-link network device generates a corresponding management frame response. The multi-link terminal device sends an identifiable management frame that may carry a first link identifier to the multi-link network device over the first link, i.e., the link connecting the first network device and the first terminal device. After receiving the management frame over the first link, the multi-link network device generates a corresponding management frame response. The multi-link terminal device sends an authentication and (re)association frame carrying the terminal identifier to the multi-link network device over the first or second link. After receiving the authentication and (re)association frame carrying the terminal identifier, the multi-link network device retrieves the corresponding terminal identifier information over the corresponding link and responds. During the four-way handshake process, the multi-link network device indicates whether the multi-link terminal device can be identified by the terminal identifier. The frame sent by the multi-link terminal device to the multi-link network device includes but is not limited to a new terminal identifier and/or at least one new link identifier.

In an embodiment, the terminal identifier and/or at least one link identifier is generated by the multi-link network device. Referring to FIG. 14, according to a non-limiting embodiment, before operation S110, the method further includes the following operations.

At operation S150, the multi-link terminal device receives a third frame sent by the multi-link network device.

At operation S160, the multi-link terminal device obtains a terminal identifier and/or at least one link identifier from the third frame.

In an embodiment, before acquiring the terminal identifier and/or the at least one link identifier, the multi-link terminal device receives a third frame sent by the multi-link network device, and acquires the terminal identifier and/or the at least one link identifier from the third frame. The terminal identifier and/or the at least one link identifier are generated by the multi-link network device. The sending of the third frame enables the multi-link network device and the multi-link terminal device to have the same terminal identifier and link identifier, which facilitates the multi-link network device to identify the terminal identifier and link identifier subsequently.

In an embodiment, the third frame includes at least one of: a third authentication frame in a four-way handshake process between the multi-link terminal device and the multi-link network device; a (re)association response frame in a FILS process between the multi-link terminal device and the multi-link network device; or a second authentication frame in the PASN three-way handshake process between the multi-link terminal device and the multi-link network device.

It should be noted that the four-way handshake protocol is intended for negotiation of unicast keys, with the main purpose for ensuring that the keys obtained by the applicant and the authenticator are the same and the latest. The required Pairwise Transient Key (PTK) can be generated by a four-way handshake, and the process is as follows: the multi-link network device sends the first authentication frame in the four-way handshake to the multi-link terminal device. The multi-link terminal device sends the second authentication frame in the four-way handshake to the multi-link network device. Upon receiving the second authentication frame in the four-way handshake, the multi-link network device generates the PTK at the multi-link network device side and responds to the multi-link terminal device with the third authentication frame in the four-way handshake. Upon receiving the third authentication frame in the four-way handshake, the multi-link terminal device generates the PTK at the multi-link terminal device side, and responds to the multi-link network device with the fourth authentication frame in the four-way handshake. Thus, the third frame includes the third authentication frame in the four-way handshake process between the multi-link terminal device and the multi-link network device.

It should be noted that the (re)association response frame corresponds to the (re)association request frame.

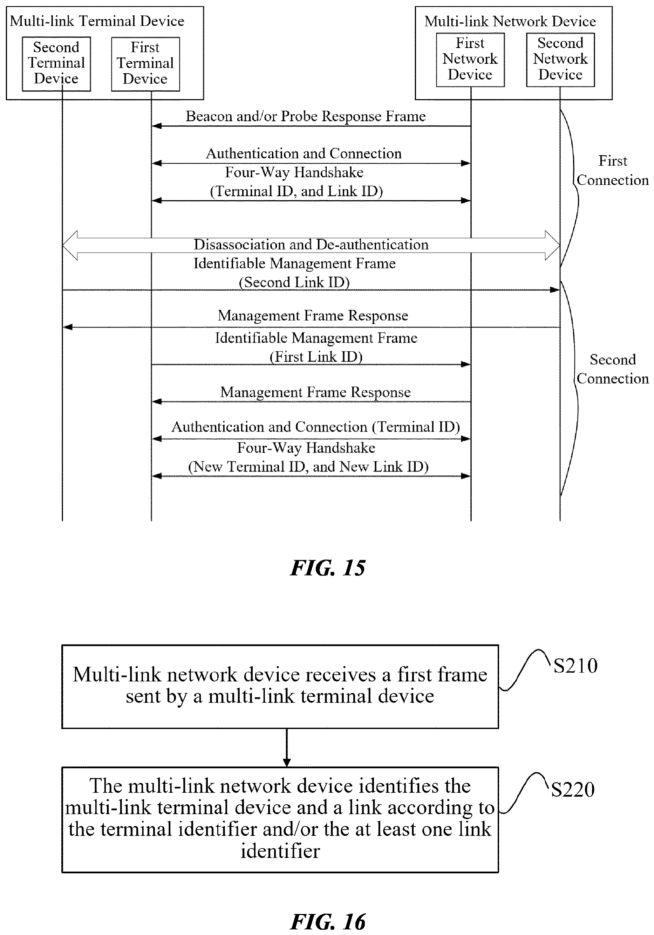

In an embodiment, referring to FIG. 15, during the first connection process, a first terminal device among a plurality of multi-link terminal devices discovers a multi-link network device that supports the multi-link operation technology by receiving a beacon and/or a probe response frame. The multi-link terminal device and the multi-link network device complete the multi-link authentication and connection through the multi-link authentication and connection processes. During the four-way handshake process, the frame (i.e., the second frame) sent by the first network device among a plurality of multi-link network devices to the first terminal device contains a terminal identifier and/or at least one link identifier. After receiving the terminal identifier and/or at least one link identifier, the first terminal device among the multi-link terminal devices stores the identifiers locally or on another multi-link network device associated with the local area. After completing the communication with the multi-link network device, the multi-link terminal device disconnects through the disassociation and de-authentication processes. During the second connection process, the multi-link terminal device sends an identifiable management frame that may carry a second link identifier to the multi-link network device, over a second link, i.e., the link connecting the second network device and the second terminal device. After receiving the management frame over the second link, the multi-link network device generates a corresponding management frame response. The multi-link terminal device sends an identifiable management frame that may carry a first link identifier to the multi-link network device over the first link, i.e., the link connecting the first network device and the first terminal device. After receiving the management frame over the first link, the multi-link network device generates a corresponding management frame response. The multi-link terminal device sends an authentication and (re)association frame carrying the terminal identifier to the multi-link network device over the first or second link. After receiving the authentication and (re)association frame carrying the terminal identifier, the multi-link network device retrieves the corresponding terminal identifier information over the corresponding link and responds. During the four-way handshake process, the multi-link network device indicates whether the multi-link terminal device can be identified by the terminal identifier. The frame sent by the multi-link network device to the multi-link terminal device includes but is not limited to a new terminal identifier and/or at least one new link identifier.

In an embodiment, the first frame is an access network query protocol (ANQP) request frame. The fourth frame includes information about one or more multi-link network device recommended for connection, and link information corresponding to each multi-link network device recommended for connection.

It should be noted that the multi-link terminal device sends an ANQP request frame (ANQP neighbour query) to the multi-link network device. The multi-link network device can perform access control according to the terminal identifier or link identifier provided by the multi-link network device. Specifically, the multi-link terminal device sends an ANQP request frame including a terminal identifier and/or at least one link identifier to the multi-link network device. Then, the multi-link network device identifies the terminal identifier and/or at least one link identifier in the ANQP request frame. As such, the multi-link network device can establish a multi-link connection with the multi-link terminal device.

In an embodiment, the first frame is a connection request frame. The fourth frame contains one or more of: link indication information indicating the link allowed for link establishment, the number of links allowed for link establishment, an indication of whether the link requested for connection is allowed for link establishment, or an indication of whether the terminal device requested for connection is allowed for link establishment.

In an embodiment, the multi-link network device identifies the terminal identifier and/or at least one link identifier of the first frame, i.e., the connection request frame, determines whether those identifiers are the same as the existing terminal identifier and link identifier, and generates a fourth frame. The fourth frame contains one or more of: link indication information indicating the link allowed for link establishment, the number of links allowed for link establishment, an indication of whether the link requested for connection is allowed for link establishment, or an indication of whether the terminal device requested for connection is allowed for link establishment.

FIG. 16 depicts a flow chart showing a method for communication performed at a multi-link network device, according to a non-limiting embodiment of the present application. The method includes the following operations.

At operation S210, a multi-link network device receives a first frame sent by a multi-link terminal device. The first frame includes a terminal identifier and/or at least one link identifier.

At operation S220, the multi-link network device identifies the multi-link terminal device and a link according to the terminal identifier and/or the at least one link identifier.

In some implementations, the multi-link network device receives from the multi-link terminal device, a first frame carrying the terminal identifier and/or at least one link identifier. The terminal identifier corresponds to the multi-link terminal device, and each of the at least one link identifier corresponds to a respective one of a plurality of links. The multi-link network device identifies the multi-link terminal device and/or the link(s) through the terminal identifier and/or at least one link identifier. Thereby, a multi-link connection is established. Corresponding network access service is provided to the respective multi-link terminal device based on the multi-link connection. The multi-link terminal devices are managed. In addition, the setting of the terminal identifier and the link identifier can reduce the sniffing and positioning by a third-party device and the connection security is improved.

In an embodiment, the multi-link network device identifies the multi-link terminal device and/or the link through the terminal identifier and/or at least one link identifier, and feeds back identification result information to the multi-link terminal device. The multi-link network device provides feedback to the multi-link terminal device when the multi-link terminal device and/or the link of the multi-link terminal device is successfully identified by the multi-link network device. As a result, the multi-link terminal device can send a connection request to the multi-link network device for establishing a multi-link connection between the multi-link network device and the multi-link terminal device, to allow the concurrent data transmission over a plurality of links. The establishment of the multi-link connection can provide corresponding network access services for the multi-link terminal device.

It should be noted that multi-link connection allows the concurrent data transmission between the multi-link network device and multi-link terminal device over the plurality of links, thereby improving data transmission throughput, reducing data transmission latency, and thus improving communication efficiency.

It should be noted that a terminal identifier corresponds to one multi-link terminal device among a plurality of multi-link terminal devices. The multi-link network device can identify the multi-link terminal devices based on the terminal identifiers. Each of the at least one link identifier corresponds a respective one of a plurality of links for connection with a multi-link terminal device. The multi-link network device can identify a respective link based on one of the link identifiers, thereby establishing a respective link connection with a multi-link terminal device.

It should be noted that in multi-link operation technology, MAC addresses can include link-specific MAC addresses and Multi-Link Device (MLD) MAC addresses. A multi-link terminal device usually includes a unique MLD MAC address and at least one link-specific MAC address. The MLD MAC address uniquely identifies a multi-link terminal device. Therefore, the multi-link terminal device corresponds to a link identifier, and the multi-link network device can identify the only corresponding multi-link terminal device through the link identifier. In addition, the link-specific MAC addresses of one multi-link terminal device are different, but one of the link-specific MAC addresses of the multi-link terminal device may be the same as the MLD MAC address. Therefore, the link identifiers corresponding to multiple links of one multi-link terminal device are different, and one of the link identifiers may be the same as the terminal identifier. When the frame used for multi-link terminal device identification carries only the link-specific MAC address(es), the first frame only carries the link identifier(s), and when the link identifier is the same as the terminal identifier, the first frame only carries the terminal identifier or the link identifier. When a frame used for multi-link terminal device identification carries a link specific MAC address of the current link and an MLD MAC address, the first frame carries one terminal identifier and one link identifier. When a frame used for multi-link terminal device identification carries a link specific MAC address of the current link, a link-specific MAC address of another link, and an MLD MAC address, the first frame carries a terminal identifier and a plurality of link identifiers.

It should be noted that the terminal identifier and the link identifier can be configured by a multi-link terminal device or a multi-link network device.

It should be noted that the first frame is encrypted and transmitted between the multi-link terminal device and the multi-link network device. Therefore, it's not easy if not impossible for a third-party device to sniff and track the terminal identifier and link identifier carried by the first frame, thereby improving the of communication security.

It should be noted that the first frame is a frame sent by a multi-link terminal device to a multi-link network device. Typically, the frame is intended to request a connection with the multi-link network device. For example, the first frame can be an association request frame in the Fast Initial Link Setup (FILS) mode.

It should be noted that the encrypted transmission of the first frame can be achieved through a key. In an implementation, the multi-link terminal device and the multi-link network device generate a multi-link operation-specific pairwise transient key (PTK) and a link-specific group temporary key (GTK) through a four-way handshake on a link, which are used to encrypt and decrypt the transmitted unicast data frames and multicast data frames, respectively, to ensure the security of data transmission.

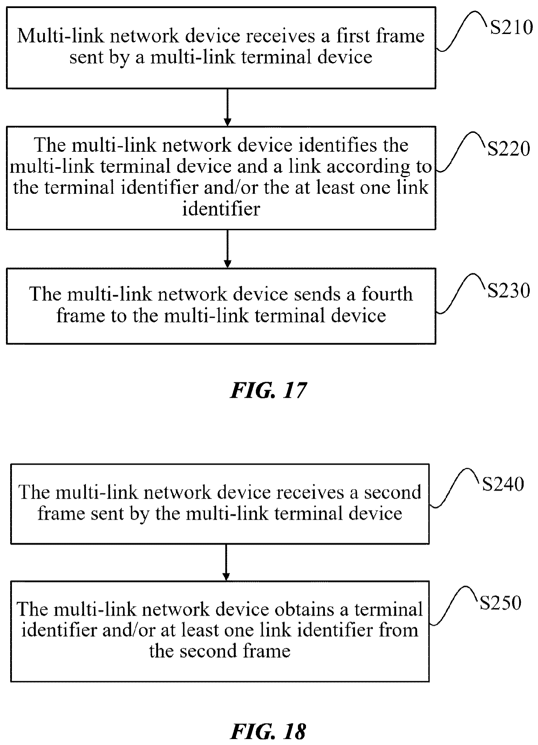

Referring to FIG. 17, according to a non-limiting embodiment, the method further includes, after operation S220, the following operation.

At operation S230, the multi-link network device sends a fourth frame to the multi-link terminal device. The fourth frame is a response frame to the first frame.

It should be noted that after receiving the first frame, the multi-link network device identifies the terminal identifier and the link identifier, in order to determine whether the same terminal identifier and link identifier are stored locally or another multi-link network device associated with the local area. Then, the multi-link network device generates a fourth frame based on the determination, and sends the fourth frame to the multi-link terminal device. Thus, the fourth frame is a response frame to the first frame. When the fourth frame indicates that the same terminal identifier and link identifier are stored locally of the multi-link network device or in the network associated with the local network, the multi-link terminal device establishes a multi-link connection with the multi-link network device and performs data transmission. Otherwise, the establishment of the connection between the multi-link terminal device and the multi-link network device fails.

Referring to FIGS. 4 and 5, one or both of the first frame and the fourth frame contain a first target field. The terminal identifier contains a device identifier. The first target field includes a device identifier information field that contains the terminal identifier and/or at least one link identifier.

It should be noted that the terminal identifier of the multi-link terminal device can be set as a device ID, which is a device ID of the multi-link terminal device. The multi-link network device can obtain the ID of the multi-link terminal device by identifying the device ID.

It should be noted that the link identifier may also be indicated by the device identifier, and each link identifier is provided with a corresponding device identifier.

In an embodiment, the first frame and the fourth frame each contains a first target field, which is schematically shown with reference to FIG. 4 or FIG. 5. The first target field includes a device identifier information field (device ID info.), and the terminal identifier and/or at least one link identifier are carried in the device identifier information field. The device identifier information field may carry a plurality of different device identifiers. The number of bytes (octets) of the device identifier information field is variable, and its specific number can be set according to the number of terminal identifiers and link identifiers.

It can be understood that, referring to FIG. 4 and FIG. 5, the first target field further includes a device identifier recognition status field that is indicative of whether the device identifier of the multi-link terminal device is recognized.

It should be noted that the first target field also includes a device identifier recognition status field (Device ID Status), which is indicative whether the device identifier of the multi-link terminal device is recognized.

It should be noted that the device identifier recognition status field is designed to take up one (1) bit. When the value of device identifier recognition status field is "0", it is indicated unrecognized device identifier of the multi-link terminal device. When the value of device identifier recognition status field is "1", it is indicated recognized device identifier of the multi-link terminal device.

It should be noted that the fourth frame received by the multi-link terminal device is a response frame to the first frame sent by the multi-link network device. When the multi-link network device recognizes the terminal identifier of the multi-link terminal device, the value of device identifier recognition status field is set to "1". In this case, the multi-link network device and the multi-link terminal device can establish a connection. When the multi-link network device fails to recognize the terminal identifier of the multi-link terminal device, the value of device identifier recognition status field is set to "0". In this case, the establishment of the connection between the multi-link network device and the multi-link terminal device fails.

In some embodiments, referring to FIGS. 4 to 6 , the first target field further includes a device identifier control bitmap field that includes one or more of the following fields:
- a device identifier recognition status tag, which is indicative of whether the first target field includes a device identifier recognition status field;
- a device identifier tag, which is indicative of whether the device identifier information field contains the device identifier;
- a plurality of link tags each of which is indicative of whether the device identifier information field contains a corresponding link identifier; and
- a device and link identifier sharing indicator tag, which is indicative of whether the device identifier and the link identifier have the same value.

It should be noted that the first target field further includes a device ID control bitmap field, which is compatible with the multi-link operation technology. The setting of the device ID control bitmap field provides a basis for the multi-link connection between the multi-link terminal device and the multi-link network device.

It should be noted that the device identifier recognition status tag (Device ID Status) is indicative of whether the first target field includes the device identifier recognition status field. The device identifier recognition status tag takes up 1 bit. When the value of device identifier recognition status tag is "0", it is indicated the first target field does not include the device identifier recognition status field. When the value of the device identifier recognition status tag is "1", it is indicated the first target field includes the device identifier recognition status field.

In an embodiment, a multi-link terminal device sends a first frame to a multi-link network device. Although the first frame contains a terminal identifier and/or at least one link identifier, the terminal identifier in the first frame is pre-configured, and the device identifier in the terminal identifier is the device identifier of the multi-link terminal device. In this case, the first target field of the first frame does not include a device identifier recognition field, and accordingly the value of device identifier recognition status tag is correspondingly set to "0".

It should be noted that the fourth frame is a response frame to the first frame. In an embodiment, after identifying the multi-link terminal device according to the terminal identifier in the first frame, the multi-link network device generates and sends a fourth frame to the multi-link terminal device. In such a case, the first target field corresponding to the fourth frame includes a device identifier recognition field, and the value of device identifier recognition status tag is set to "1".

In an embodiment, referring to FIG. 6, the plurality of link tags are the first link tag (1st. link ID), the second link tag (2nd. link ID) and the third link tag(3rd. link ID). Each link tag corresponds to a respective link, and is indicative of whether the device identifier recognition information field contains the link identifier of the respective link. When the value of the link tag is "1", it indicates that the subsequent device identifier information field contains the corresponding link identifier. When the value of the link tag is "0", it indicates that the device identifier information field does not contain the corresponding link identifier.

It should be noted that the device identifier control bitmap field shown in FIG. 6 is provided with three link tags, i.e., the first link tag, the second link tag and the third link tag, and each link tag takes up 1 bit. In an embodiment, a multi-link terminal device and a multi-link network device each includes three links, i.e., a first link, a second link and a third link. The multi-link terminal device and the multi-link network device can be connected through any one or more of the three links. Each of the first link, the second link and the third link is assigned with a respective link identifier. For the first frame, when the value of a link tag is "1", it indicates that the multi-link terminal device expects to establish a connection with the multi-link network device over the corresponding link. For example, when the values of the first link tag and the second link tag in the first target field of the first frame are "1" and the value of the third link tag is "0", it indicate that the device identifier information field only includes the link identifiers corresponding to the first link and the second link, and the multi-link terminal device expects to establish a connection with the multi-link device over the first link and the second link. For the fourth frame, the values of the link tags in the first target field correspond to those carried in the first frame. When the value of the recognition state field is "1", it indicates that the device identifier of the multi-link terminal device can be identified by the multi-link network device.

It should be noted that if the multi-link network device is identified successfully and the device identifier of the multi-link terminal device can be identified by the multi-link network device, then the value of the recognition status field of the fourth frame is set to "1". Based on this, the multi-link terminal device can send a connection request to the multi-link network device, such that the multi-link terminal device and the multi-link network device establishes a connection between the corresponding links and realize a multi-link connection.

It should be noted that the device identifier control bitmap field in FIG. 6 is shown only by way of an example, and more or less link tags can be provided. The number of link tags in the device identifier control bitmap field is determined by the number of links between the multi-link terminal device and the multi-link network device.

It should be noted that the device identifier control bitmap field includes a device and link identifier sharing indicator tag, which takes up 1 bit and is indicative of whether the device identifier and the link identifier share the same value. In the multi-link operation technology, one of the link-specific MAC addresses of the multi-link terminal device may be the same as the MLD MAC address. Therefore, the link identifiers corresponding to the links of the same multi-link terminal device are different, but one of the link identifiers may also be the same as the terminal identifier. When the device identifier and the link identifier are the same, the value of the device and link identifier sharing indicator tag is "1", otherwise it is "0".

In an embodiment, the device and link identifier sharing indicator is implicit. Specifically, the communication protocol stipulates that the terminal identifier and the link identifier are the same. Therefore, it is not necessary to particularly set the device and link identifier sharing indicator in the first target field under the protocol.

In an embodiment, referring to FIG. 6 , the device identifier control bitmap field further includes a reserved tag ("Reserved"), which takes up 2 bits.

In an embodiment, referring to FIG. 7 , the device identifier information field includes a length field and a device identifier field.

It should be noted that the device identifier information field includes a length field (length) and a device identification field (Device ID). The device identifier field is intended to store the device identifier of the multi-link terminal device, and the length field is indicative of the bit length of the device identifier of the multi-link terminal device.

In an embodiment, referring to FIG. 8, the first frame and the fourth frame each include a media access control (MAC) header and a frame body. The first target field is carried in the MAC header or the frame body, and is a device identifier element field or a device identifier key data encapsulation field.

It should be noted that the first frame and the fourth frame each includes an MAC header and a frame body. The first target field is carried in the frame body or the MAC header. The first target field is a device identifier element field or a device identifier key data encapsulation field.

It should be noted that when the terminal identifier and the link identifier are the same, the terminal identifier is carried in the Transmitter Address (TA) or Receiver Address (RA) field of the MAC header. When the terminal identifier and the link identifier are different, the terminal identifier is carried in the frame body, and the link identifier is carried in the TA or RA field of the MAC header.

In an embodiment, referring to FIG. 4, the device identifier element field includes an element identifier field (Element ID), a length information field (Length), an element identifier extension field (Element ID Extension), a device identifier control bitmap field (Device ID control bitmap), a device identifier recognition status field (Device ID Status) and a device identifier information field (Device ID info.). In an embodiment, the element identifier field, the length information field, the element identifier information extension field, the device identifier control bitmap field, and the device identifier recognition status field each takes up one byte, and the number of bytes of the device identifier information field is set to be variable.

In an embodiment, referring to FIG. 5, during the transmission of the first frame and the fourth frame, in order to improve the security of information transmission, the device identifier element field is usually encrypted for transmission. After the device identifier element field is encrypted, the device identifier key data encapsulation field is obtained. The device identifier key data encapsulation field includes a device identifier control bitmap field (Device ID control bitmap), a device identifier recognition status field (Device ID Status), and a device identifier information field (Device ID info.). In an embodiment, the device identifier control bitmap field, and the device identifier recognition status field each takes up one byte, and the number of bytes of the device identifier information field is set to be variable.

It should be noted that, referring to FIGS. 6 and 7, the structures and uses of the device identifier control bitmap field, the device identifier recognition status field and the device identifier information field in the device identifier element field and the device identifier key data encapsulation field are respectively the same. The device identifier control bitmap field includes a device identifier recognition status tag, a device identifier tag, a plurality of link tags, a device and link identifier sharing indicator tag. and a reserved tag. Each device identifier information field include a length field and a device identifier field.

In an embodiment, referring to FIGS. 9 and 10, the first frame and/or the fourth frame includes a second target field. The terminal identifier includes an Identifiable Random MAC (IRM) Address (IRMA). The second target field includes an IRM field that carries the terminal identifier and/or at least one link identifier.

It should be noted that the terminal identifier of the multi-link terminal device can be set as an IRMA. The IRMA is a media access control address randomly assigned to the multi-link terminal device. The multi-link network device can obtain the media access control address of the multi-link terminal device through the IRMA, thereby establishing a connection with the multi-link terminal device.

It should be noted that a link identifier may also be indicated by an IRMA. Each link identifier is assigned with a corresponding IRMA.

In an embodiment, the first frame and the fourth frame each contains a second target field, which is schematically shown with reference to FIG. 9 or FIG. 10. The second target field includes an IRM field. The terminal identifier and/or at least one link identifier are carried in the IRM field. The IRM field may carry a plurality of different IRMs. The number of bytes (Octets) of the IRM field is 6*N, where the number "6" is the number of bytes of one IRM, and "N" is the total number of terminal identifiers and link identifiers carried by the first frame and/or the fourth frame, i.e., the total number of the IRMs. The setting of the number of bytes of the IRM field allows the first frame and/or the fourth frame to carry a terminal identifier and/or at least one link identifier.

In an embodiment, referring to FIG. 9 and FIG. 10, the second target field further includes an IRM recognition status field that is indicative of whether the IRM of a multi-link terminal device is recognized.

It should be noted that the second target field also includes an IRM recognition status field (Device ID Status), which is indicative whether the IRM the multi-link terminal device is recognized.

It should be noted that the IRM recognition status field is designed to take up one (1) bit. When the value of the IRM recognition status field is "0", it is indicated unrecognized IRM of the multi-link terminal device. When the value of device identifier recognition status field is "1", it is indicated recognized IRM of the multi-link terminal device.

It should be noted that the fourth frame received by the multi-link terminal device is a response frame to the first frame sent by the multi-link network device. When the multi-link network device recognizes the IRM of the multi-link terminal device, the value of the IRM recognition status field is set to "1". When the multi-link network device fails to recognize the IRM of the multi-link terminal device, the value of the IRM recognition status field is set to "0".

In some embodiments, referring to FIGS. 9 to 11 , the second target field further includes an IRM control bitmap field that includes one or more of the following fields:
- an IRM recognition status tag, which is indicative of whether the second target field includes an IRM recognition status field;
- an IRM tag, which is indicative of whether an IRM field contains an IRM; and
- a plurality of link tags, which are indicative of whether the IRM field carries a corresponding link identifier; and
- an IRM and link identifier sharing indicator tag, which is indicative of whether the IRM and link identifier share a same value.

It should be noted that the second target field further includes an IRM control bitmap field, which is compatible with the multi-link operation technology. The setting of the IRM control bitmap field provides a basis for the multi-link connection between the multi-link terminal device and the multi-link network.

It should be noted that the IRM recognition status tag (IRM ID Status) is indicative of whether the second target field includes an IRM recognition status field. The IRM recognition status tag takes up 1 bit. When the value of the IRM recognition status tag is "0", it is indicated the second target field does not include the IRM recognition status field. When the value of the IRM recognition status tag is "1", it is indicated the second target field includes the IRM recognition status field.

In an embodiment, a multi-link terminal device sends a first frame to a multi-link network device. Although the first frame contains a terminal identifier and/or at least one link identifier, the terminal identifier in the first frame is pre-configured, and the device identifier in the terminal identifier is the device identifier of the multi-link terminal device. In this case, the second target field of the first frame does not include an IRM recognition field, and accordingly the value of the IRM recognition status tag is correspondingly set to "0".

It should be noted that the fourth frame is a response frame to the first frame. After identifying the multi-link terminal device according to the terminal identifier carried in the first frame, the multi-link network device generates and sends a fourth frame to the multi-link terminal device. In this case, the second target field corresponding to the fourth frame includes an IRM recognition field, and the value of the IRM recognition status tag is "1".

In an embodiment, referring to FIG. 11, the plurality of link tags are the first link tag (1st. link ID), the second link tag (2nd. link ID) and the third link tag(3rd. link ID). Each link tag corresponds to a respective link, and is indicative of whether the IRM field contains the link identifier of the respective link. When the value of the link tag is "1", it indicates that the subsequent IRM field contains the corresponding link identifier. When the value of the link tag is "0", it indicates that the IRM field does not contain the corresponding link identifier.

It should be noted that the IRM control bitmap field shown in FIG. 11 is provided with three link tags, i.e., the first link tag, the second link tag and the third link tag, and each link tag takes up 1 bit. In an embodiment, a multi-link terminal device and a multi-link network device each includes three links, i.e., a first link, a second link and a third link. The multi-link terminal device and the multi-link network device can be connected through any one or more of the three links. Each of the first link, the second link and the third link is assigned with a respective link identifier. For the first frame, when the value of a link tag is "1", it indicates that the multi-link terminal device expects to establish a connection with the multi-link network device over the corresponding link. For example, when the values of the first link tag and the second link tag in the second target field of the first frame are "1" and the value of the third link tag is "0", it indicate that the IRM field only includes the link identifiers corresponding to the first link and the second link, and the multi-link terminal device expects to establish a connection with the multi-link device over the first link and the second link. For the fourth frame, the values of the link tags in the second target field correspond to those carried in the first frame. When the value of the recognition state field is "1", it indicates that the IRM of the multi-link terminal device can be identified by the multi-link network device.

It should be noted that if the multi-link network device is identified successfully and the device identifier of the multi-link terminal device can be identified by the multi-link network device, then the value of the recognition status field of the fourth frame is set to "1". Based on this, the multi-link terminal device can send a connection request to the multi-link network device, such that the multi-link terminal device and the multi-link network device establishes a connection between the corresponding links and realize a multi-link connection.

It should be noted that, the IRM control bitmap field in FIG. 11 is shown only by way of an example, and more or less link tags can be provided. The number of link tags in the IRM control bitmap field is determined by the number of links between the multi-link terminal device and the multi-link network device.

It should be noted that the IRM control bitmap field includes an IRM and link identifier sharing indicator tag, which takes up 1 bit and is indicative of whether the IRM and the link identifier share the same value. In the multi-link operation technology, one of the link-specific MAC addresses of the multi-link terminal device may be the same as the MLD MAC address. Therefore, the link identifiers corresponding to the links of the same multi-link terminal device are different, but one of the link identifiers may also be the same as the terminal identifier. When the terminal identifier and the IRM corresponding to a link identifier are the same, the value of the IRM and link identifier sharing indicator tag is "1", otherwise it is "0".

In an embodiment, the IRM and link identifier sharing indicator is implicit. Specifically, the communication protocol stipulates that the terminal identifier and the link identifier are the same. Therefore, it is not necessary to particularly set the IRM and link identifier sharing indicator in the second target field under the protocol.

In an embodiment, referring to FIG. 11 , the IRM control bitmap field further includes a reserved tag ("Reserved"), which takes up 2 bits.

In an embodiment, referring to FIG. 8, the first frame and the fourth frame each include a media access control (MAC) header and a frame body. The second target field is carried in the MAC header or the frame body, and is an IRM element field or an IRM key data encapsulation field.

It should be noted that the first frame and the fourth frame each includes an MAC header and a frame body. The second target field is carried in the frame body. The second target field is an IRM element field or an IRM key data encapsulation field.

It should be noted that when the terminal identifier and the link identifier in the second target field are the same, the terminal identifier is carried in the Transmitter Address (TA) or Receiver Address (RA) field of the MAC header. When the terminal identifier and the link identifier are different, the terminal identifier is carried in the frame body, and the link identifier is carried in the TA or RA field of the MAC header.

In an embodiment, referring to FIG. 9, the IRM element field includes an element identifier field (Element ID), a length information field (Length), an element identifier extension field (Element ID Extension), an IRM control bitmap field (IRM control bitmap), an IRM recognition status field (IRM Status) and an IRM information field (IRM info.). In an embodiment, the element identifier field, the length information field, the element identifier information extension field, the IRM control bitmap field, and the IRM recognition status field each takes up one byte. The number of bytes of the IRM field is set to be 6*N, where N denotes the number of IRMs.

In an embodiment, referring to FIG. 10, during the transmission of the first frame and the fourth frame, in order to improve the security of information transmission, the IRM element field is usually encrypted for transmission. After the IRM element field is encrypted, the IRM key data encapsulation field is obtained. The IRM key data encapsulation field includes an IRM control bitmap field (IRM control bitmap), an IRM recognition status field (IRM Status), and an IRM field (IRM info.). In an embodiment, the IRM control bitmap field, and the IRM recognition status field each takes up one byte, and the number of bytes of the IRM field is set to be variable.

It should be noted that, referring to FIG. 11, the structures and uses of the IRM control bitmap field, the IRM recognition status field and the IRM information field in the IRM element field and the IRM key data encapsulation field are respectively the same. The IRM control bitmap field includes an IRM recognition status tag, an IRM identifier tag, a plurality of link tags, an IRM and link identifier sharing indicator tag, and a reserved tag.

In an embodiment, the terminal identifier and/or at least one link identifier is generated by the multi-link terminal device. Referring to FIG. 18, according to a non-limiting embodiment, before operation S210, the method further includes the following operations.

At operation S240, the multi-link network device receives a second frame sent by the multi-link terminal device.

At operation S250, the multi-link network device obtains a terminal identifier and/or at least one link identifier from the second frame.

It should be noted that before the multi-link network device receives the first frame sent by the multi-link terminal device, the multi-link network device receives the second frame sent by the multi-link terminal device and obtains the terminal identifier and/or at least one link identifier from the second frame. The multi-link network device saves the terminal identifier and/or at least one link identifier carried by the second frame locally or in other multi-link network devices associated with the local device, so that the multi-link network device can later identify the terminal identifier and the link identifier.

In an embodiment, the second frame includes at least one of, a second authentication frame during a four-way handshake process between the multi-link terminal device and the multi-link network device; a fourth authentication frame during the four-way handshake process between the multi-link terminal device and the multi-link network device; a (re)association request frame during the fast initial link setup (FILS) process between the multi-link terminal device and the multi-link network device; a first authentication frame during a Pre-Association Security Negotiation (PASN) three-way handshake process between the multi-link terminal device and the multi-link network device; or a third authentication frame during the PSAN three-way handshake process between the multi-link terminal device and the multi-link network device.

It should be noted that the four-way handshake protocol is intended for negotiation of unicast keys, with the main purpose for ensuring that the keys obtained by the applicant and the authenticator are the same and the latest. The required Pairwise Transient Key (PTK) can be generated by a four-way handshake, and the process is as follows: the multi-link network device sends the first authentication frame in the four-way handshake to the multi-link terminal device. The multi-link terminal device sends the second authentication frame in the four-way handshake to the multi-link network device. Upon receiving the second authentication frame in the four-way handshake, the multi-link network device generates the PTK at the multi-link network device side and responds to the multi-link terminal device with the third authentication frame in the four-way handshake. Upon receiving the third authentication frame in the four-way handshake, the multi-link terminal device generates the PTK at the multi-link terminal device side, and responds to the multi-link network device with the fourth authentication frame in the four-way handshake. Thereby, the second frame includes the second authentication frame and the fourth authentication frame in the four-way handshake process between the multi-link terminal device and the multi-link network device.

In an embodiment, the (re)association request frame of the multi-link terminal device and the multi-link network device during the establishment of FILS is also the second frame. The FILS is mainly intended to accelerate the establishment of the connection between the multi-link terminal device and the multi-link network device. FILS is defined in 802.11ai, which enables a wireless access point, e.g., the multi-link network device, to periodically send discovery frames with a period of 20 milliseconds, which is shorter compared with the period of a beacon, to allow the multi-link terminal device to discover multi-link network devices more quickly. In addition, the (re)association of FILS includes Dynamic Host Configuration Protocol (DHCP) information, which allows the configuration of the address to complete along with the association.

In an embodiment, the third frame includes the third authentication frame in the PSAN three-way handshake process between the link terminal device and the multi-link network device.

In an embodiment, referring to FIG. 13, during the first connection process, a first terminal device among a plurality of multi-link terminal devices discovers a multi-link network device that supports the multi-link operation technology by receiving a beacon and/or a probe response frame. The multi-link terminal device and the multi-link network device complete the multi-link authentication and connection through the multi-link authentication and connection processes. During the four-way handshake process, the frame (i.e., the second frame) sent by the first terminal device among a plurality of multi-link terminal devices to the first network device contains a terminal identifier and/or at least one link identifier. After receiving the terminal identifier and/or at least one link identifier, the first network device among the multi-link network devices stores the identifiers locally or on another multi-link network device associated with the local area. After completing the communication with the multi-link network device, the multi-link terminal device disconnects through the disassociation and de-authentication processes. During the second connection process, the multi-link terminal device sends an identifiable management frame that may carry a second link identifier to the multi-link network device, over a second link, i.e., the link connecting the second network device and the second terminal device. After receiving the management frame over the second link, the multi-link network device generates a corresponding management frame response. The multi-link terminal device sends an identifiable management frame that may carry a first link identifier to the multi-link network device over the first link, i.e., the link connecting the first network device and the first terminal device. After receiving the management frame over the first link, the multi-link network device generates a corresponding management frame response. The multi-link terminal device sends an authentication and (re)association frame carrying the terminal identifier to the multi-link network device over the first or second link. After receiving the authentication and (re)association frame carrying the terminal identifier, the multi-link network device retrieves the corresponding terminal identifier information over the corresponding link and responds. During the four-way handshake process, the multi-link network device indicates whether the multi-link terminal device can be identified by the terminal identifier. The frame sent by the multi-link terminal device to the multi-link network device includes but is not limited to a new terminal identifier and/or at least one new link identifier.

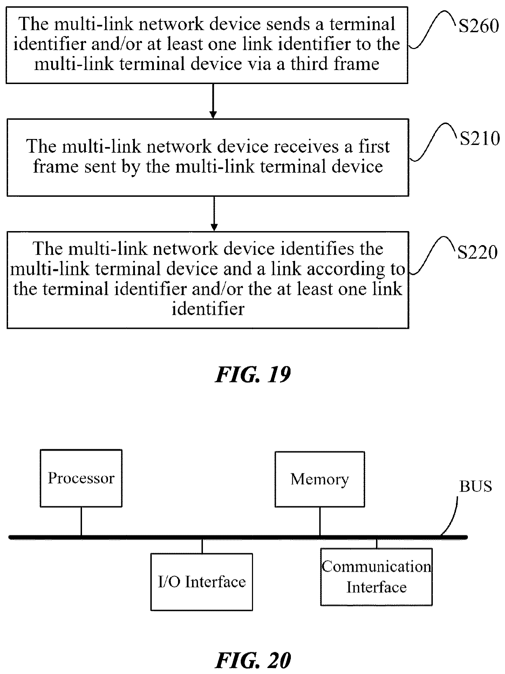

In an embodiment, the terminal identifier and/or at least one link identifier is generated by the multi-link network device. Referring to FIG. 19, according to a non-limiting embodiment, before operation S210, the method further includes the following operations.

At operation S260, the multi-link network device sends a terminal identifier and/or at least one link identifier to the multi-link terminal device via a third frame.

In an embodiment, before receiving the first frame sent by the multi-link terminal device, the multi-link network device sends a terminal identifier and/or at least one link identifier to the multi-link terminal device through a third frame. The terminal identifier and/or at least one link identifier are generated by the multi-link network device. The sending of the third frame enables the multi-link network device and the multi-link terminal device to have the same terminal identifier and link identifier, which facilitates the multi-link network device to identify the terminal identifier and link identifier subsequently.

In an embodiment, the third frame includes at least one of: a third authentication frame in a four-way handshake process between the multi-link terminal device and the multi-link network device; a (re)association response frame in a FILS process between the multi-link terminal device and the multi-link network device; or a second authentication frame in the PASN three-way handshake process between the multi-link terminal device and the multi-link network device.

It should be noted that the four-way handshake protocol is intended for negotiation of unicast keys, with the main purpose for ensuring that the keys obtained by the applicant and the authenticator are the same and the latest. The required Pairwise Transient Key (PTK) can be generated by a four-way handshake, and the process is as follows: the multi-link network device sends the first authentication frame in the four-way handshake to the multi-link terminal device. The multi-link terminal device sends the second authentication frame in the four-way handshake to the multi-link network device. Upon receiving the second authentication frame in the four-way handshake, the multi-link network device generates the PTK at the multi-link network device side and responds to the multi-link terminal device with the third authentication frame in the four-way handshake. Upon receiving the third authentication frame in the four-way handshake, the multi-link terminal device generates the PTK at the multi-link terminal device side, and responds to the multi-link network device with the fourth authentication frame in the four-way handshake. Thus, the third frame includes the third authentication frame in the four-way handshake process between the multi-link terminal device and the multi-link network device.

It should be noted that the (re)association response frame corresponds to the (re)association request frame.

In an embodiment, referring to FIG. 15, during the first connection process, a first terminal device among a plurality of multi-link terminal devices discovers a multi-link network device that supports the multi-link operation technology by receiving a beacon and/or a probe response frame. The multi-link terminal device and the multi-link network device complete the multi-link authentication and connection through the multi-link authentication and connection processes. During the four-way handshake process, the frame (i.e., the second frame) sent by the first network device among a plurality of multi-link network devices to the first terminal device contains a terminal identifier and/or at least one link identifier. After receiving the terminal identifier and/or at least one link identifier, the first terminal device among the multi-link terminal devices stores the identifiers locally or on another multi-link network device associated with the local area. After completing the communication with the multi-link network device, the multi-link terminal device disconnects through the disassociation and de-authentication processes. During the second connection process, the multi-link terminal device sends an identifiable management frame that may carry a second link identifier to the multi-link network device, over a second link, i.e., the link connecting the second network device and the second terminal device. After receiving the management frame over the second link, the multi-link network device generates a corresponding management frame response. The multi-link terminal device sends an identifiable management frame that may carry a first link identifier to the multi-link network device over the first link, i.e., the link connecting the first network device and the first terminal device. After receiving the management frame over the first link, the multi-link network device generates a corresponding management frame response. The multi-link terminal device sends an authentication and (re)association frame carrying the terminal identifier to the multi-link network device over the first or second link. After receiving the authentication and (re)association frame carrying the terminal identifier, the multi-link network device retrieves the corresponding terminal identifier information over the corresponding link and responds. During the four-way handshake process, the multi-link network device indicates whether the multi-link terminal device can be identified by the terminal identifier. The frame sent by the multi-link network device to the multi-link terminal device includes but is not limited to a new terminal identifier and/or at least one new link identifier.

In an embodiment, the first frame is an access network query protocol (ANQP) request frame. The fourth frame includes information about one or more multi-link network device recommended for connection, and link information corresponding to each multi-link network device recommended for connection.

It should be noted that the multi-link terminal device sends an ANQP request frame (ANQP neighbour query) to the multi-link network device. The multi-link network device can perform access control according to the terminal identifier or link identifier provided by the multi-link network device. Specifically, the multi-link terminal device sends an ANQP request frame including a terminal identifier and/or at least one link identifier to the multi-link network device. Then, the multi-link network device identifies the terminal identifier and/or at least one link identifier in the ANQP request frame. As such, the multi-link network device can establish a multi-link connection with the multi-link terminal device.

In an embodiment, the first frame is a connection request frame. The fourth frame contains one or more of: link indication information indicating the link allowed for link establishment, the number of links allowed for link establishment, an indication of whether the link requested for connection is allowed for link establishment, or an indication of whether the terminal device requested for connection is allowed for link establishment.

In an embodiment, the multi-link network device identifies the terminal identifier and/or at least one link identifier of the first frame, i.e., the connection request frame, determines whether those identifiers are the same as the existing terminal identifier and link identifier, and generates a fourth frame. The fourth frame contains one or more of: link indication information indicating the link allowed for link establishment, the number of links allowed for link establishment, an indication of whether the link requested for connection is allowed for link establishment, or an indication of whether the terminal device requested for connection is allowed for link establishment.

According to an embodiment, an electronic device is provided. As shown in FIG. 20, the device includes one or more processors; a memory storing one or more programs, which when executed by the one or more processors, cause one or more processors to carry out the method for communication as described with respect to operations S110 to S120 or the method for communication as described with respect to operation S210 to S220.

The processor and the memory may be connected by a bus or other means.

As a non-transitory computer-readable storage medium, the memory can be configured to store non-transitory software programs and non-transitory computer-executable programs. In addition, the memory may include high-speed random access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

Non-transitory software programs and instructions for the method for communication are stored in a memory which, when executed by a processor, causes the processor to carry out the operations in any one of the methods for information processing in the embodiment as described above, e.g., S110 to S120 described in conjunction with FIG. 2, or S210 to S220 described in conjunction with FIG. 16.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

According to an embodiment of the present application, there is provided a computer-readable storage medium storing a computer-executable instruction which, when executed by a processor, causes the processor to carry out any one of the methods as described above.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage medium, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Some embodiments of the present application are described in conjunction with the drawings above. However, the present disclosure is not limited thereto. Various alternations can be made within the knowledge of those having ordinary skills in the art without departing from the scope of the present application. Further, the embodiments of the present application and the features in the embodiments can be combined with each other without conflict.

## Claims

1. A method for communication, comprising:
acquiring, by a multi-link terminal device, a pre-configured terminal identifier and/or at least one link identifier; and
sending, by the multi-link terminal device, a first frame that contains the terminal identifier and/or the at least one link identifier to a multi-link network device, to cause the multi-link network device to identify the multi-link terminal device and/or at least one link according to the terminal identifier and/or at least one link identifier.

2. The method as claimed in claim 1, further comprising:
receiving, by the multi-link terminal device, a fourth frame sent by the multi-link network device; wherein the fourth frame is a response frame to the first frame.

3. The method as claimed in claim 2, wherein, one or both of the first frame and the fourth frame contain a first target field; the terminal identifier contains a device identifier; and the first target field comprises a device identifier information field that carries the terminal identifier and/or at least one link identifier.

4. The method as claimed in claim 3, wherein, the first target field further comprises a device identifier recognition status field that is indicative of whether the device identifier of the multi-link terminal device is recognized.

5. The method as claimed in claim 4, wherein, the first target field further comprises a device identifier control bitmap field that comprises at least one of:
a device identifier recognition status tag, which is indicative of whether the first target field contains the device identifier recognition status field;
a device identifier tag, which is indicative of whether the device identifier information field contains the device identifier;
a plurality of link tags each indicative of whether the device identifier information field contains a respective link identifier of the at least one link identifier; and
a device and link identifier sharing indicator tag, which is indicative whether the device identifier and the link identifier share a same value.

6. The method as claimed in claim 3, wherein, the device identifier information field comprises a length field and a device identifier field.

7. The method as claimed in claim 3, wherein, the first frame and the fourth frame each comprises a media access control (MAC) header and a frame body; the first target field is carried in the MAC header or the frame body; and the first target field is a device identifier element field or a device identifier key data encapsulation field.

8. The method as claimed in claim 2, wherein, one or both of the first frame and the fourth frame comprise a second target field; the terminal identifier comprises an Identifiable Random MAC (IRM) Address (IRMA); the second target field comprises an IRM field that carries the terminal identifier and/or the at least one link identifier.

9. The method as claimed in claim 8, wherein, the second target field further comprises an IRM recognition status field that is indicative of whether the IRM of the multi-link terminal device is recognized.

10. The method as claimed in claim 9, wherein, the second target field further comprises an IRM control bitmap field that comprises at least one of:
an IRM recognition status tag, which is indicative of whether the second target field comprises the IRM recognition status field;
an IRM tag, which is indicative of whether the IRM field contains the IRM;
a plurality of link tags, which are indicative of whether the IRM field carries a respective link identifier of the at least one link identifier; or
an IRM and link identifier sharing indicator tag, which is indicative of whether the IRM and link identifier share a same value.

11. The method as claimed in claim 8, wherein, the first frame and the fourth frame each comprises a media access control (MAC) header and a frame body; the second target field is carried in the MAC header or the frame body; and the second target field is an IRM element field or an IRM key data encapsulation field.

12. The method as claimed in claim 1, wherein, the terminal identifier and/or the at least one link identifier are generated by the multi-link terminal device; and before sending by the multi-link terminal device the first frame to the multi-link network device, the method further comprises:
sending, by the multi-link terminal device, the terminal identifier and/or the at least one link identifier to the multi-link network device via a second frame.

13. The method as claimed in claim 12, wherein, the second frame comprises at least one of,
a second authentication frame during a four-way handshake process between the multi-link terminal device and the multi-link network device;
a fourth authentication frame during the four-way handshake process between the multi-link terminal device and the multi-link network device;
a (re)association request frame during an establishment of a fast initial link setup (FILS) process between the multi-link terminal device and the multi-link network device;
a first authentication frame during a Pre-Association Security Negotiation (PASN) three-way handshake process between the multi-link terminal device and the multi-link network device; or
a third authentication frame during the PASN three-way handshake process between the multi-link terminal device and the multi-link network device.

14. The method as claimed in claim 1, wherein, the terminal identifier and/or the at least one link identifier are generated by the multi-link network device; and before acquiring by the multi-link terminal device the pre-configured terminal identifier and/or at least one link identifier, the method further comprises:
receiving, by the multi-link terminal device, a third frame sent by the multi-link network device; and
acquiring, by the multi-link terminal device, the terminal identifier and/or the at least one link identifier from the third frame.

15. The method as claimed in claim 14, wherein, the third frame comprises at least one of,
a third authentication frame during a four-way handshake process between the multi-link terminal device and the multi-link network device;
a (re)association response frame during an establishment of a fast initial link setup (FILS) process between the multi-link terminal device and the multi-link network device; or
a second authentication frame during a Pre-Association Security Negotiation (PASN) three-way handshake process between the multi-link terminal device and the multi-link network device.

16. The method as claimed in claim 2, wherein, the first frame is an access network query protocol (ANQP) request frame; and the fourth frame comprises information about one or more multi-link network device recommended for connection, and link information corresponding to each multi-link network device recommended for connection.

17. The method as claimed in claim 2, wherein, the first frame is a connection request frame; and
the fourth frame contains one or more of:
link indication information indicating the link allowed for link establishment,
number of links allowed for link establishment,
an indication of whether the link requested for connection is allowed for link establishment, or an indication of whether the terminal device requested for connection is allowed for link establishment.

18. A method for communication, comprising:
receiving, by a multi-link network device, a first frame sent by a multi-link terminal device; wherein the first frame comprises a terminal identifier and/or at least one link identifier; and
identifying, by the multi-link network device, the multi-link terminal device and a link according to the terminal identifier and/or the at least one link identifier.

19. The method as claimed in claim 18, further comprising:
sending, by the multi-link network device, a fourth frame to the multi-link terminal device; wherein the fourth frame is a response frame to the first frame.

20. The method as claimed in claim 19, wherein, one or both of the first frame and the fourth frame contain a first target field; the terminal identifier contains a device identifier; and the first target field comprises a device identifier information field that carries the terminal identifier and/or the at least one link identifier.

21. The method as claimed in claim 20, wherein, the first target field further comprises a device identifier recognition status field that is indicative of whether the device identifier of the multi-link terminal device is recognized.

22. The method as claimed in claim 21, wherein, the first target field further comprises a device identifier control bitmap field that comprises at least one of:
a device identifier recognition status tag, which is indicative of whether the first target field contains the device identifier recognition status field;
a device identifier tag, which is indicative of whether the device identifier information field contains the device identifier;
a plurality of link tags each indicative of whether the device identifier information field contains a respective link identifier of the at least one link identifier; or
a device and link identifier sharing indicator tag, which is indicative whether the device identifier and the link identifier share a same value.

23. The method as claimed in claim 20, wherein, the device identifier information field comprises a length field and a device identifier field.

24. The method as claimed in claim 20, wherein, the first frame and the fourth frame each comprises a media access control (MAC) header and a frame body; the first target field is carried in the MAC header or the frame body; and the first target field is a device identifier element field or a device identifier key data encapsulation field.

25. The method as claimed in claim 19, wherein, one or both of the first frame and the fourth frame contains a second target field; the terminal identifier contains an Identifiable Random MAC (IRM) Address (IRMA); the second target field comprises an IRM field that carries the terminal identifier and/or the at least one link identifier.

26. The method as claimed in claim 25, wherein, the second target field further comprises an IRM recognition status field that is indicative of whether the IRM of the multi-link terminal device is recognized.

27. The method as claimed in claim 26, wherein, the second target field further comprises an IRM control bitmap field that comprises at least one of:
an IRM recognition status tag, which is indicative of whether the second target field comprises the IRM recognition status field;
an IRM tag, which is indicative of whether the IRM field contains the IRM;
a plurality of link tags, which are indicative of whether the IRM field carries a respective link identifier of the at least one link identifier; or
an IRM and link identifier sharing indicator tag, which is indicative of whether the IRM and link identifier share a same value.

28. The method as claimed in claim 25, wherein, the first frame and the fourth frame each comprises a media access control (MAC) header and a frame body; the second target field is carried in the MAC header or the frame body; and the second target field is an IRM element field or an IRM key data encapsulation field.

29. The method as claimed in claim 18, wherein, the terminal identifier and/or the at least one link identifier are generated by the multi-link terminal device; and before receiving by the multi-link network device the first frame sent by the multi-link terminal device, the method further comprises:
receiving, by the multi-link network device, a second frame sent by the multi-link terminal device; and
acquiring, by the multi-link network device, the terminal identifier and/or the at least one link identifier from the second frame.

30. The method as claimed in claim 29, wherein, the second frame comprises at least one of,
a second authentication frame during a four-way handshake process between the multi-link terminal device and the multi-link network device;
a fourth authentication frame during the four-way handshake process between the multi-link terminal device and the multi-link network device;
a (re)association request frame during an establishment of a fast initial link setup (FILS) process between the multi-link terminal device and the multi-link network device;
a first authentication frame during a Pre-Association Security Negotiation (PASN) three-way handshake process between the multi-link terminal device and the multi-link network device; or
a third authentication frame during the PASN three-way handshake process between the multi-link terminal device and the multi-link network device.

31. The method as claimed in claim 18, wherein, the terminal identifier and/or the at least one link identifier are generated by the multi-link network device; and before receiving by the multi-link network device the first frame sent by the multi-link terminal device, the method further comprises:
sending, by the multi-link network device, the terminal identifier and/or the at least one link identifier to the multi-link terminal device via a third frame.

32. The method as claimed in claim 31, wherein, the third frame comprises at least one of,
a third authentication frame during a four-way handshake process between the multi-link terminal device and the multi-link network device;
a (re)association response frame during an establishment of a fast initial link setup (FILS) process between the multi-link terminal device and the multi-link network device; or
a second authentication frame during a Pre-Association Security Negotiation (PASN) three-way handshake process between the multi-link terminal device and the multi-link network device.

33. The method as claimed in claim 19, wherein, the first frame is an access network query protocol (ANQP) request frame; and the fourth frame comprises information about one or more multi-link network device recommended for connection, and link information corresponding to each multi-link network device recommended for connection.

34. The method as claimed in claim 19, wherein, the first frame is a connection request frame; and
the fourth frame contains at least one of:
link indication information indicating the link allowed for link establishment,
number of links allowed for link establishment,
an indication of whether the link requested for connection is allowed for link establishment, or
an indication of whether the terminal device requested for connection is allowed for link establishment.

35. An electronic device, comprising:
at least one processor; and
a memory storing at least one program thereon, which when executed by the processor, causes the processor to carry out the method as claimed in any one of claims 1 to 17, or any one of claims 18 to 34.

36. A computer-readable medium storing a computer program thereon, which when executed by a processor, causes the processor to carry out the method as claimed in any one of claims 1 to 17, or any one of claims 18 to 34.
